Europäisches Patentamt

European Patent Office

Office européen des brevets

(19)

(11)  EP 0 500 967 B1

(12)  EUROPEAN PATENT SPECIFICATION

(45) Date of publication and mention
of the grant of the patent:
**25.07.2001   Bulletin 2001/30**

(51) Int Cl.⁷: **G06F 12/00**, G06F 15/16,
G06F 9/46

(21) Application number: **91916224.8**

(22) Date of filing: **18.09.1991**

(86) International application number:
**PCT/JP91/01238**

(87) International publication number:
**WO 92/05489 (02.04.1992 Gazette 1992/08)**

(54) **METHOD OF NONSYNCHRONOUS ACCESS TO SHARED MEMORY**

VERFAHREN ZUM ASYNCHRONEN ZUGRIFF ZU EINEM GEMEINSAMEN SPEICHER

PROCEDE D'ACCES NON SYNCHRONE A UNE MEMOIRE PARTAGEE

(84) Designated Contracting States:
**DE FR GB**

(30) Priority: **18.09.1990  JP  24820590**

(43) Date of publication of application:
**02.09.1992   Bulletin 1992/36**

(73) Proprietor: **FUJITSU LIMITED
Kawasaki-shi, Kanagawa 211 (JP)**

(72) Inventors:
• **KABEMOTO, Akira, 466-12, Ohba-cho Midori-ku
Kanagawa 227 (JP)**
• **OGAWA, Toshio, 1-37-7, Midori-cho
Tokyo 183 (JP)**

• **SHIROTANI, Masashi,
12-13-207, Minami-showa-machi
Hiroshima 736 (JP)**

(74) Representative:
**Fane, Christopher Robin King et al
Haseltine Lake & Co.,
Imperial House,
15-19 Kingsway
London WC2B 6UD (GB)**

(56) References cited:
EP-A- 0 364 226          WO-A-84/01043
JP-A- 53 135 232         JP-A- 56 156 978
JP-A- 57 025 053         JP-A- 57 211 628
JP-A- 59 116 866         JP-A- 61 165 170
JP-A- 62 052 663         JP-B- 47 025 527
JP-B- 59 041 215

## Description

The present invention relates to storage access circuitry for use, for example, in an asynchronous access system for accessing a shared storage of a multiprocessor system in which processor modules and shared storage modules are connected together by a system bus.

Since a processor in a multiprocessor system directly accesses a shared storage according to its physical address, data is transmitted in word units through a system bus synchronously with an access instruction. When a number of processors are provided in the system, the frequency of accesses via the system bus rises. Therefore, the number of processors in the system is limited, thereby limiting the system performance. Accordingly, a shared storage must be accessed at a high speed and the overhead of the system bus must be reduced by minimizing its load.

A conventional multiprocessor system comprises a plurality of processor modules and a plurality of shared storage modules which are connected together by a system bus for transfer of information, thereby building a computer system.

In such a conventional multiprocessor system, a central processing unit of each processor module is operated in a synchronous access method in which a shared storage module at its physical address space is directly accessed through a system bus according to a physical address.

However, there is a problem that it takes a much longer time for a processor module to access a shared storage through a system bus using a synchronous access method than to access a main storage in the processor module.

WO-A-84-01043 proposes a multiprocessor system in which a plurality of processors are interconnected to a plurality of shared memory modules by a bus system. Each processor has interface circuits connecting it to the bus system. Those interface circuits may be considered to provide storage access circuitry for connection between a central processing unit and a rewritable storage to control access by the central processing unit to the storage, the circuitry comprising: write control means operable in response to execution by the central processing unit of a write instruction, included in a sequence of instructions being executed by the central processing unit and calling for data to be written into the said storage, to store the data to be written in a buffer, and also operable to cause the data stored in the buffer in the said write instruction to be written into the said storage during the course of execution by the central processing unit of a subsequent instruction in the said instruction sequence. The interface circuits are adapted to implement block transfers of data between the local memories of the processors and the shared memory modules. The write transfer of a block is accomplished by sending to the appropriate memory an initial address, a block write command, and the length of a block of data, and thereafter transmitting only data.

Storage access circuitry embodying the present invention is characterised by serialise instruction processing means operable in response to execution by the central processing unit of a predetermined serialise instruction, included in the instruction sequence at the end of a write instruction and calling for data stored in a buffer in the preceding write instruction to be written into the said storage, to cause the writing of that stored data to be carried out during the course of execution by the central processing unit of the said serialise instruction; and exception interrupt generating means operable, in the event that an exception occurs during the writing into the said storage of the data stored in the buffer in response to such a serialise instruction, to apply an interrupt to the central processing unit, such that the interrupt is received by the central processing unit before execution of the serialise instruction is completed.

Such storage access circuitry can provide an asynchronous access system for accessing a shared storage in which a shared storage is accessed at a high speed and its load is minimized by reducing the overhead of the system bus, whilst still enabling recovery from an error in the actual hardware write operation to be performed by a simple method. More specifically, such storage access circuitry can provide an asynchronous access system for accessing a shared storage at a high speed by using as a cache memory a connection unit which connects a processor module to a system bus.

Incidentally, one form of serialisation processing in a multiprocessor system is described in EP-A-0364226. In this processing, when it is not necessary to keep a main storage access waiting until after the serialisation process is completed, in particular, upon storing, when a particular CPU transmits a serialisation notification to all other CPUs and does not receive prior serialisation notification from the other CPUs, the main storage access is instantly executed. When, on the other hand, the particular CPU transmits the serialisation notification to all other CPUs and receives a serialisation notification from the other CPUs the main storage access is kept waiting.

Reference will now be made, by way of example, to the accompanying drawings, in which:

Figures 1A to 1B are diagrams for explaining principles of an asynchronous access system embodying the present invention;
Figure 2 illustrates a multiprocessor system to which an embodiment of the present invention is applied;
Figure 3 is a block diagram of a processor module used in the Figure 2 system;
Figure 4 is a block diagram of a shared storage module used in the Figure 2 system;

Figure 5 is a block diagram of a connection unit included in the processor module of Figure 3;

Figure 6 is a block diagram of a connection unit included in the shared storage module of Figure 4;

Figure 7 is a diagram for explaining transfer commands on a system bus in an embodiment of the present invention;

Figure 8 is a diagram for explaining writing and transfer operations in an embodiment of the present invention;

Figure 9 is a diagram for explaining reading and transfer operations in an embodiment of the present invention;

Figure 10 is a diagram for explaining an address space map in an embodiment of the present invention;

Figure 11 is a diagram for explaining extended SSU space in an embodiment of the present invention;

Figure 12 is a diagram for explaining SSM configuration definitions by a first control register in an embodiment of the present invention;

Figure 13 is a diagram for explaining SSM configuration definitions by a second control register in an embodiment of the present invention;

Figure 14 is a diagram for explaining packaging of shared storage modules corresponding to the configuration definitions of Figures 12 and 13;

Figures 15A and 15B are flowcharts of an accessing process in a program mode in an embodiment of the present invention;

Figures 16A and 16B are flowcharts of an accessing process in a DMA mode in an embodiment of the present invention;

Figure 17 is a diagram for explaining a descriptor used in the DMA mode access;

Figure 18 is a block diagram for explaining an SSM reading operation in the asynchronous program mode in an embodiment of the present invention;

Figure 19 is a block diagram for explaining an SSM writing operation in the asynchronous program mode in an embodiment of the present invention;

Figures 20A and 20B are timing charts for explaining the operation of an example of the prior art technology;

Figure 21A shows the configuration of a processor-side connection unit which receives a serialize instruction and performs state control in an embodiment of the present invention;

Figure 21B shows the transition of states in the state controller in the Figure 21A connection unit;

Figure 21C shows a state transition circuit;

Figures 22A and 22B are timing charts for explaining the operation of an embodiment of the present invention; and

Figure 22C shows a process performed by an interrupt handler for interrupting the serialize instruction.

In a normal program mode (synchronous access), four words (command, address, data, status (C, A, D, S)) are necessary for one access through a bus. If sixteen words, equivalent to four accesses in the program mode, are accessed as one block in the DMA format, the necessary number of words is only seven, that is, a command, an address, four pieces of data, and a status (C, A, D, D, D, D, and S). This is half the number of words used in the program mode. Thus, an asynchronous access system for accessing a shared storage can be realized with a reduced overhead and efficient performance of a system bus.

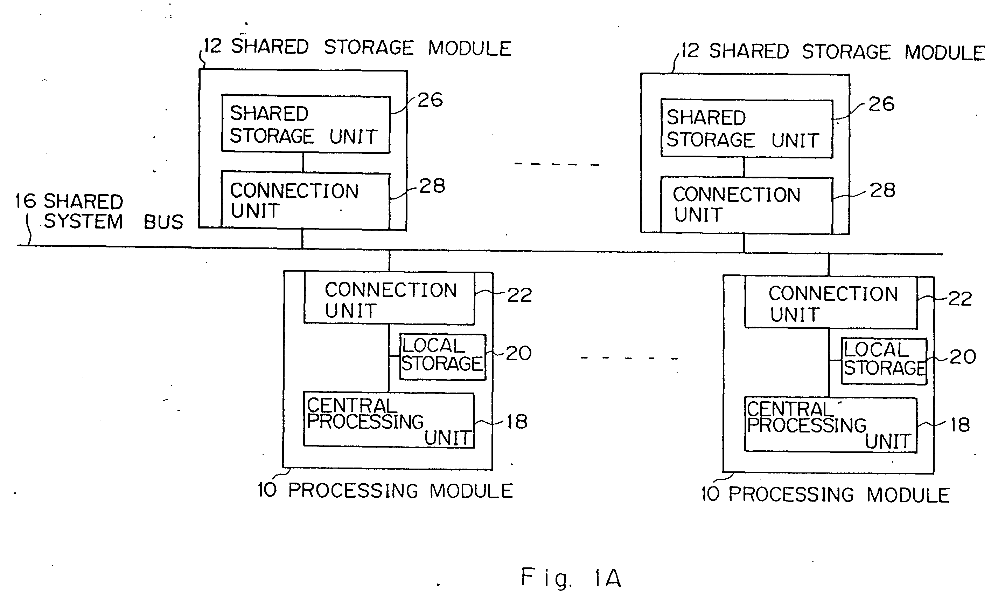

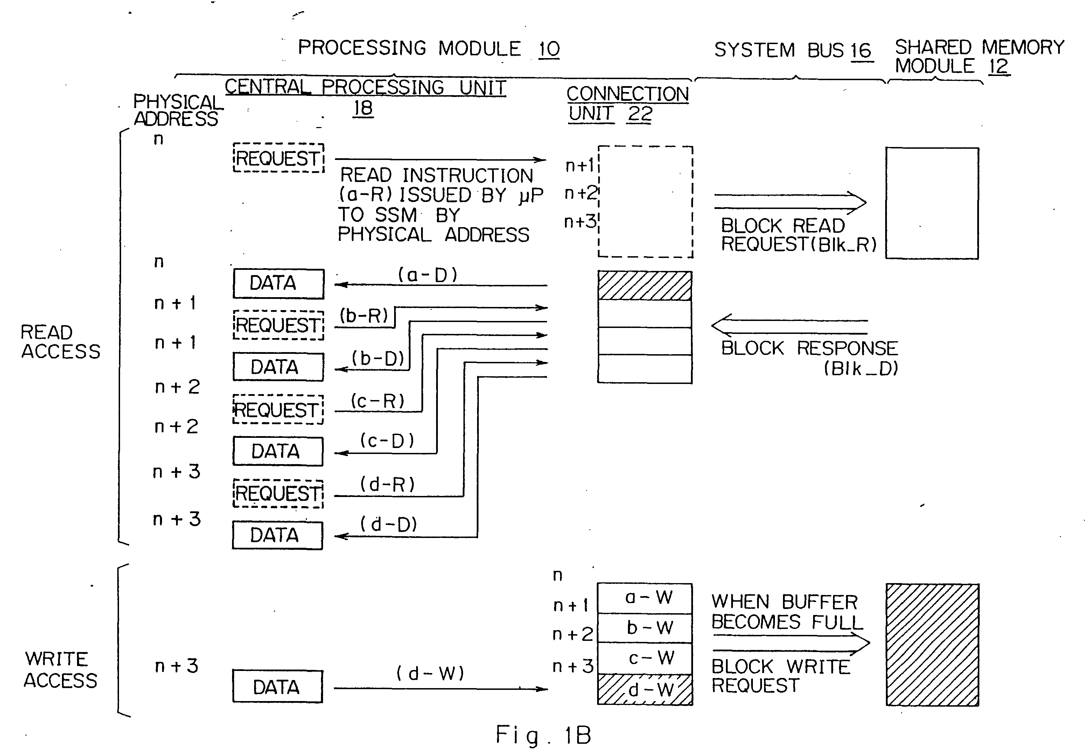

Figures 1A and 1B show a principle of an asynchronous access system according to an embodiment of the present invention.

The system shown in Figure 1A comprises a plurality of processing modules (processor modules) 10 each comprising at least a main storage 20, a central processing unit 18, and a connection unit (storage access circuitry) 22 for connection to a system bus 16, and a plurality of shared storage modules 12 each comprising at least a shared storage unit 26 and a connection unit 28 for connection to a system bus 16.

An asynchronous access system embodying the present invention, for accessing a shared storage based on the above described configuration of a computer system, requests a block access to the shared storage module 12 through the system bus 16 when the connection unit 22 of the processing module 10 recognizes serial addresses of write instructions or read instructions issued by the central processing unit 18 to the shared storage module 12 as shown in Figure 1B.

In response to a block read request of the processing module 10, the connection unit 28 of the shared storage module 12 reads from the shared storage unit 26 one-block of data comprising a predetermined number of words preceded by an access address, and transmits them to the processing module 10.

When the answer from the shared storage module 12 in response to the block read request is received by the connection unit 22 of the processing module 10, the one-block data comprising a predetermined number of words is stored in an internal buffer of the connection unit 22. Then, in response to the next read instruction of the central processing unit 18, corresponding data stored in the internal buffer is read for transmission.

When the connection unit 22 of the processing module 10 receives serial addresses of write instructions from the central processing unit 18, the write data from the central processing unit 18 is stored in the internal buffer. Then, a block write request is issued to the shared storage module 12 when the buffer is full, that is, when the stored data has reached one-block volume comprising a predetermined number of words.

Additionally, in an asynchronous access system for accessing a shared storage embodying the present invention, the connection unit 22 of the processing module 10 generates a start transfer command (SC) comprising a destination ID code (DID) indicating a shared storage module 12 to be accessed, a source ID code (SID) indicating the source of the transmitted data, an operand indicating an access mode, and an access data capacity (BCT). Then, it transmits the activation transfer command (SC) to the above described system bus 16 together with an access address (A) in the shared storage module 12 at the destination.

That is, the connection unit 22 transmits an activation transfer command (SC) and an access address (A) at the time of a reading access, and transmits a start transfer command (SC), an access address (A), and write data at the time of a writing access.

The connection unit 28 of the shared storage module 12 monitors the access bus 16, and accepts the start transfer command (SC) when it determines that the destination ID code of the start transfer command (SC) and its own unit ID match.

Then, the connection unit 28 of the shared storage module 12 generates a response transfer command (EC) comprising an ID code (DID) indicating the processing module 10 at the destination, a source ID code (SID) indicating the source of the data, and a terminating code and transmits the command to the system bus 16 when the access of the shared storage unit 26 is terminated according to the start transfer command (SC) received during the receiving operation.

In response to the answer, the connection unit 22 of the processing modules 10 monitors the system bus 16, and accepts the response transfer command (EC) when it determines that the destination ID code (DID) of the response transfer command (EC) and its own unit ID match.

According to the asynchronous access system with the above described configuration of the shared storage embodying the present invention, data is transmitted in block units, which have a predetermined number of words, through a system bus for one access instruction, corresponding to access instructions having serial access addresses for synchronous access. Sending data in block units can speed up accessing data through a system bus and reduce an overhead of a system bus, thereby reducing its load, improving its efficiency, and enhancing the system performance.

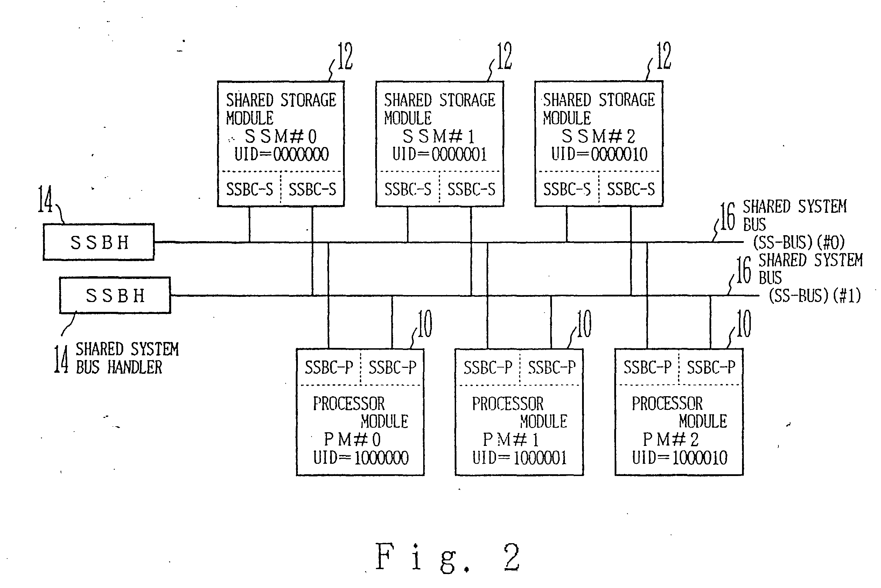

Figure 2 illustrates a system configuration of a multiprocessor system to which a shared storage configuration system embodying the present invention is applied.

The multiprocessor system comprises more than one processor module (PM) 10 and more than one shared storage module (SSM) 12. The processor modules 10 and the shared storage modules 12 are each connected to a shared system bus (SS-BUS) 16, a split bus, through a connection unit (SSBC-P) 22. The shared system bus 16 is controlled by a shared system bus handler (SSBH) 14 and the arbitration of the shared system bus 16 is centrally controlled by the shared system bus handler 14.

The #0 to #2 processor modules 10 have their unit ID numbers allocated as follows:

    PM#0; UID = 1000000
    PM#1; UID = 1000001
    PM#2; UID = 1000010

Also, the #0 to #2 shared storage modules 12 have their ID numbers allocated as follows:

    SSM#0; UID = 0000000
    SSM#1; UID = 0000001
    SSM#2; UID = 0000010

Although the process modules 10 and the shared storage modules 12 are each controlled by the #0 and #1 shared system bus 16 which is duplicated for fault-tolerant purposes, they may be connected to more shared system buses 16.

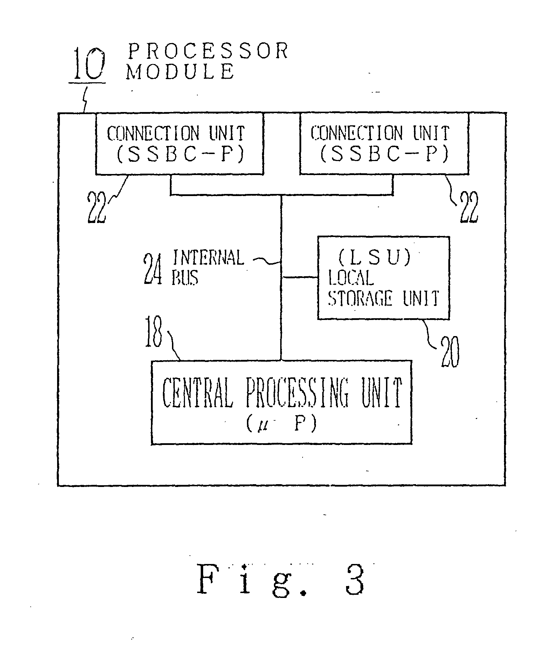

Figure 3 is a block diagram of the processor module shown in Figure 2.

The processor module comprises a central processing unit (μP) 18, a local storage unit (LSU) 20 and two connection units (SSBC-P) 22 for the two shared system buses 16, which are all connected by an internal bus 24.

In the processor module 10, software (operating system - OS) runs on the central processing unit 18 and the local storage unit 20. Pieces of software from the processor modules 10 shown in Figure 2 cooperate with one another to form a distributed OS for performing a set of operations. The central processing unit 18 of each processor module 10 fetches instruction codes only from its local storage unit 20.

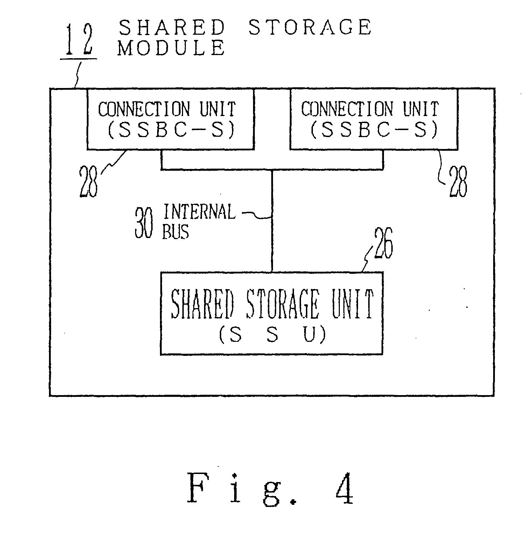

Figure 4 is a block diagram of the shared storage module 12 shown in Figure 2.

The shared storage module 12 comprises a shared storage unit (SSU) 24 and two connection units (SSBC-S) 28 corresponding to the two shared system buses 16, which are all connected by an internal bus 30. The shared storage unit 26 stores data to be shared among the processor modules 10 shown in Figure 2.

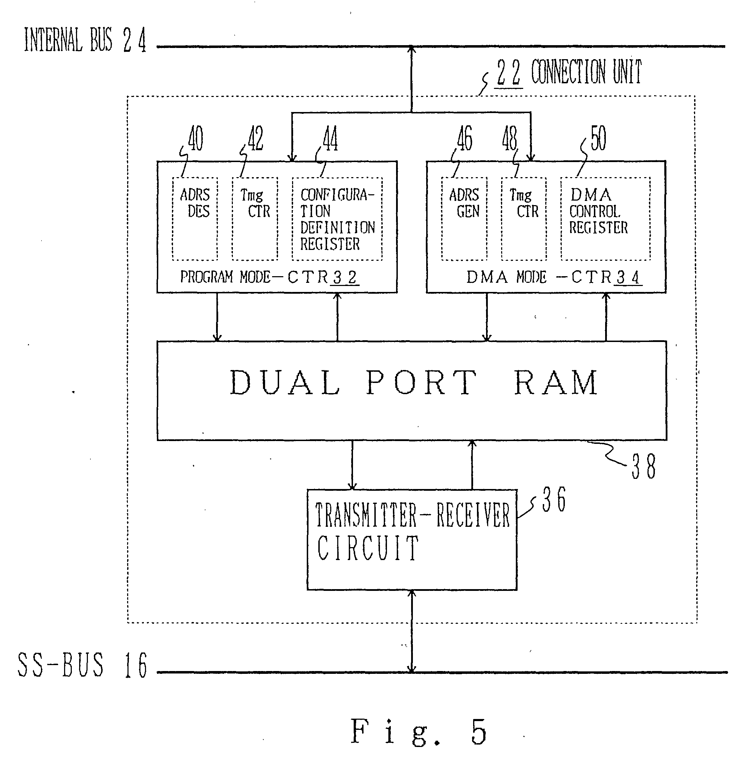

Figure 5 is a block diagram of the connection unit (SSBC-P) 22 in the processor module 10 of Figure 3.

The connection unit 22 accesses a shared storage unit 12 of Figure 2 via the shared system bus 16 in the following two modes:

    (1) program mode
    (2) DMA mode

The program mode can be operated in the synchronous access method in which transmission data contain one word per access instruction, and in the asynchronous access method in which data is transmitted in block units each containing a plurality of words per access instruction.

The connection unit 22 comprises a program mode access control circuit 32 and a DMA mode access control circuit 34, which are provided for the two access modes. It further comprises a transmitter-receiver circuit 36 for transmitting data to or receiving data from the shared system bus 16, and also comprises a dual port RAM 38 which serves as a buffer. The program mode control circuit 32 comprises an address decoder 40, a timing controller 42, and a configuration definition register 44. The DMA mode access control circuit 34 comprises an address generator 46, a timing controller 48 and a DMA control register 50.

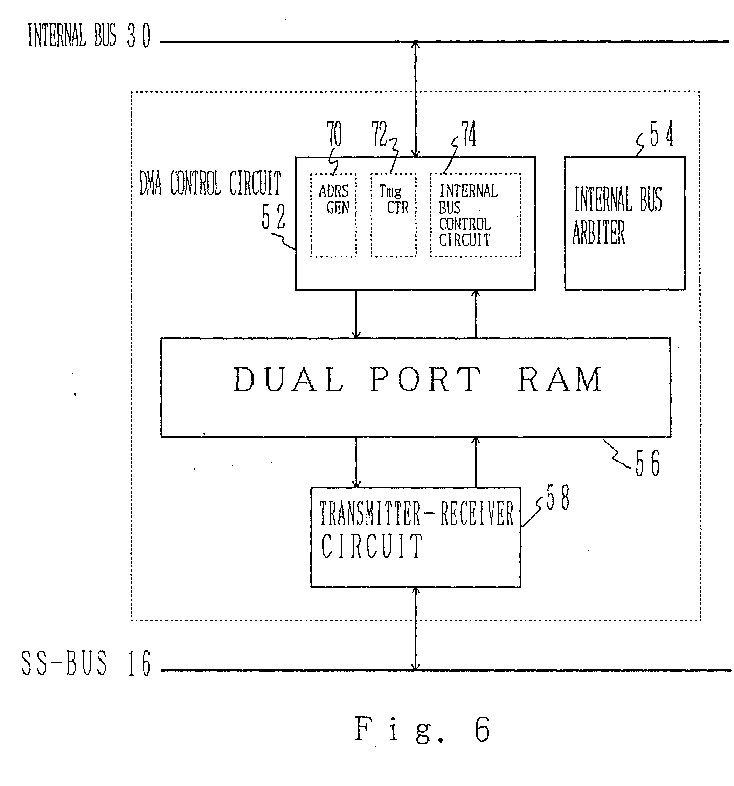

Figure 6 is a block diagram of the connection unit (SSBC - S) 28 of the shared storage module 12 shown in Figure 4.

The connection unit 28 is constructed from a DMA control circuit 52, an internal bus arbiter circuit 54, a transmitter-receiver circuit 56, and a dual port RAM 58. The DMA control circuit 52 comprises an internal bus control circuit 74 for controlling the internal bus 30, an address generator 70 and a timing controller 72; the internal bus arbitrator circuit 54 performs the arbitration of the internal bus 30 when more than one connection unit 28 is installed in the shared storage module 12, as shown in Figure 4; the transmitter-receiver 56 is for the shared system bus 16; and the dual port RAM 58 serves as a buffer.

The connection units 22 and 28, which make connections among the processor modules 10 and the shared storage modules 12 via the shared system bus 16, adopt a split transfer system in which each access is split into start transfer and response transfer.

In the bus control of the split transfer system, a unit ID number is allocated to each module, the unit ID being used as a module identifier on the bus.

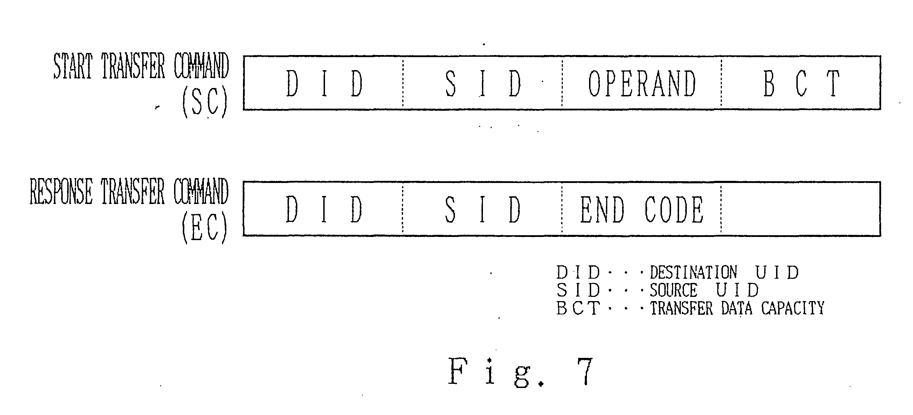

Figure 7 illustrates examples of a start transfer command SC and a response transfer command EC used by the connection units 22 and 28.

In the start transfer command SC of Figure 7, the DID (Destination ID) indicates the unit ID of a, destination module and the SID (Source ID) indicates the unit ID of a source module. The operand indicates a type of access. The types of access include memory access to the shared storage modules 12, control register access to the shared storage modules 12 and the other processor modules 10 to halt or reset them and so on. The BCT (Byte Count) indicates data capacity in accessing the shared storage modules 12.

In the response transfer command EC, the DID and SID are the same as those in the start transfer command SC and the end code indicates a conclusion state of the destination, i.e., normal conclusion or abnormal conclusion.

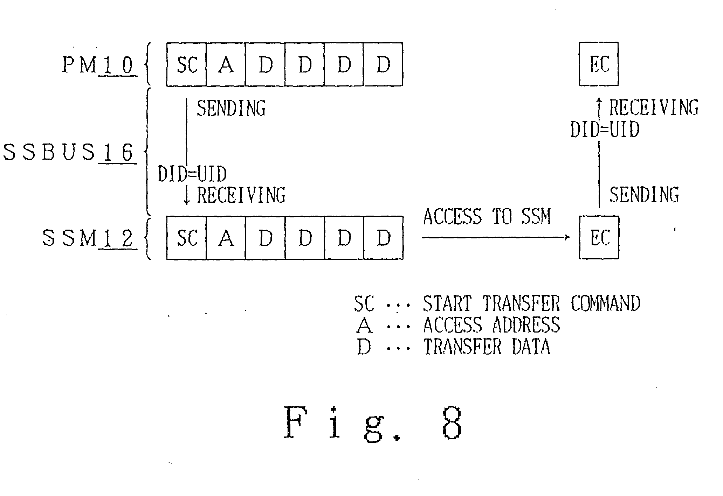

Figure 8 is a diagram for explaining the operation of write access (store access) for transferring data from a source processor module 10 to a shared storage module 12 over the shared system bus 16 and writing it in the shared storage 12.

First, the source (accessing) processor module 10 generates a start transfer command SC. That is, the transfer start command SC generated by the source processor module consists of the SID indicating its own unit ID, the DID indicating the unit ID of a shared storage module 12 being accessed, an operand indicating the write access and the BCT indicating the access capacity. Following the transfer start command SC, an access address A of the destination shared storage module 12 and data D to be written into are sent onto the system bus 16.

The destination shared storage module 12 monitors the shared system bus 16 and compares the DID indicating the destination contained in the start transfer command SC with its own unit ID. When a coincidence occurs, the shared storage module 12 performs an accepting operation. The shared storage module 12 then makes a write access to the shared storage unit 26 (refer to Figure 4) and transmits to the source processor module 10 a response transfer command EC including the end code of the write access and in which the DID and SID are interchanged because the start transfer and the response transfer are in opposite directions to each other.

The source processor module 10 monitors the shared system bus 16 and performs the accepting operation when a coincidence occurs between the destination ID in the response transfer command EC and its own unit ID, thereby terminating one-time access.

During the idle time from the termination of transmission of the start transfer command SC to the initiation of the transmission of the response transfer command EC, the system bus may be used to transfer the start transfer command SC or the response transfer command EC for another access.

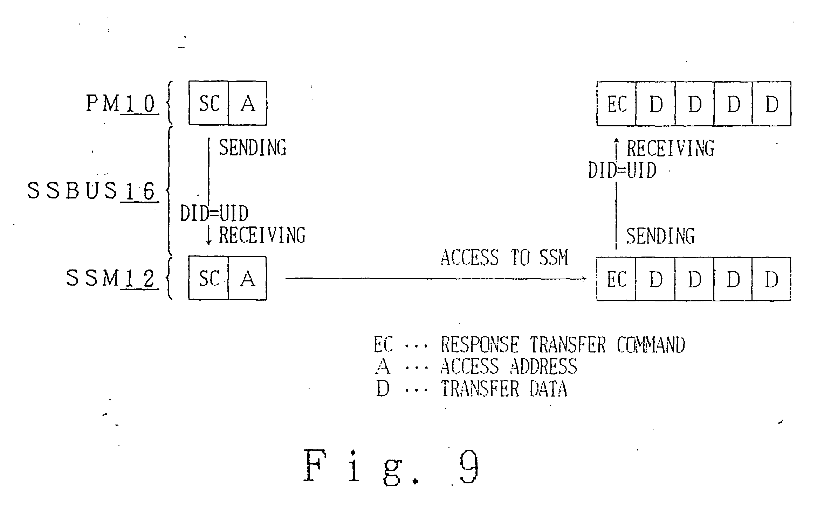

Figure 9 is a diagram for use in explaining the operation of read access (fetch access) for reading data from a shared storage module 12 and transferring it to a processor module 10.

First, a source processor module 10 generates a start transfer command SC which consists of the SID indicating its own unit ID, the DID indicating the unit ID of a destination shared storage module 12 being accessed, an operand indicating the read access and the BCT indicating the access capacity. Following the transfer start command SC, an access address A of the shared storage module 12 being accessed is sent onto the system bus 16.

The destination shared storage module 12 monitors the shared system bus 16 and compares the DID in the start transfer command SC with its own unit ID. When the comparison indicates equality, the module 12 performs the accepting operation. The destination shared storage module 12 then makes read access to the shared storage unit 26 (refer to Figure 4) of the shared storage module 12 and transmits to the source processor module 10 a response transfer command EC, which contains the end code of the read access, and readout data D. In the response transfer command EC, the DID and SID are interchanged because the start transfer and the response transfer are in opposite directions to each other.

The source processor module 10 monitors the shared system bus 16 and performs the accepting operation when a coincidence occurs between the destination ID in the response transfer command EC and in its own unit ID, thereby terminating one-time read access.

The read access is made in the program access mode or the DMA access mode. In either access mode, the operations on the system bus 16 are the same.

[Address Space]

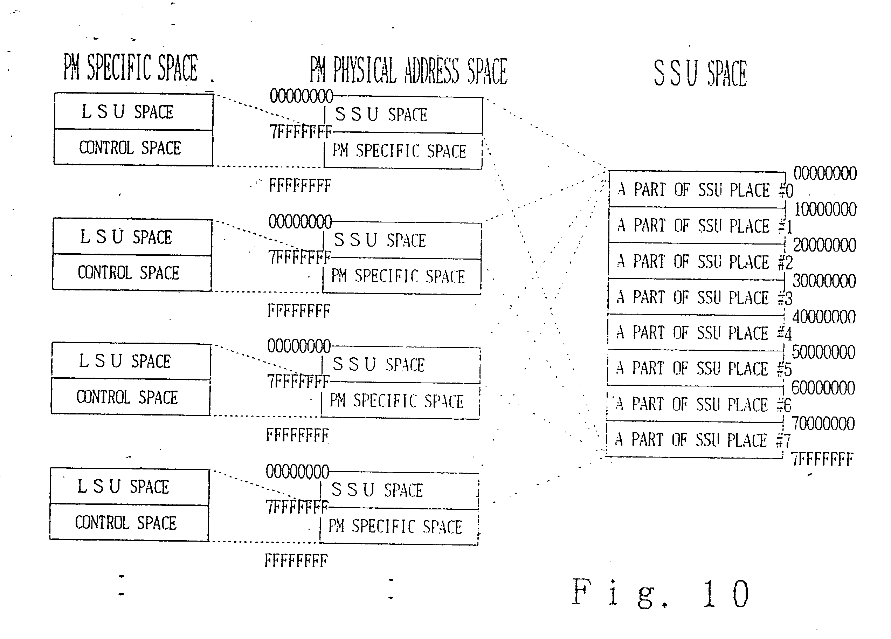

Figure 10 is a diagram for explaining an address space map in the present embodiment of the present invention.

In Figure 10, the physical address space of each processor module is roughly classified into shared storage module space (hereinafter referred to as SSU space) and space inherent in the processor module (hereinafter referred to as PM inherent space).

The PM inherent space is space which is inherent in hardware resources of each processor module 10 and is present in each processor module 10. The PM inherent space forms multiple-address space for the total number of processor modules in the system. In the present embodiment, it is supposed that the amount of PM inherent space is 2GB.

The SSU space is common to all the processor modules 10. That is, the SSU space is formed by more than one shared storage module 12 and forms space which is common to the processor modules 12 in the system; it can also be directly accessed by the physical addresses of the processor modules 10. Thus, only data to,be shared among all the processor modules 10 is stored in the SSU space.

In the present embodiment, a 2-GB SSU space is used as an example. As shown on the right side of the figure, the SSU space is further divided into eight partial SSU spaces #0 to #7 in 256-MB units. Each of the partial SSU spaces #0 to #7 is formed from one of the shared storage modules 12 of the present embodiment.

Moreover, the PM space of each processor module 10 is divided into LSU space and control space. Operands required by each processor module and its own data are stored in the LSU space, which is a part of the PM inherent space. It is the presence of the LSU space that permits the number of accesses made by each processor module to the SSU space (formed by the shared storage modules 12) to be decreased.

If an access address designated by the central processing unit 18 of each processor module points to the LSU space, then closed access will be made within the processor module 10.

When the access address (physical address) designated by the central processing unit 18 points to the SSU space, the connection unit 22 of the processor module 10 recognizes that the access is being made to the SSU space and accesses a corresponding shared storage module 12 via the system bus 16.

By mapping the SSU space and the LSU space into the physical address space on the processor modules 10, it becomes possible for software to access the SSU space and the LSU space without needing to switch between the LSU space and the SSU space.

Since the SSU space is directly mapped into the physical address space of each processor module 10 as shown in Figure 10, access to the SSU space formed of more than one shared storage module 12 may be made in the following two access modes.

①Program mode in which physical addresses are used to make direct access by software instructions of, the central processing unit 18; or
②DMA mode in which a shared storage module to be accessed is selected and a data transfer between a processor module 10 and the shared storage module 12 is started by specifying an access address and the length of transfer.

The accessible SSU space varies with the access mode. In the present embodiment, the SSU space accessible by the program mode is only the 2-GB space which has been directly mapped into the physical address space of each processor module. In the DMA mode, however, by designating a shared storage module 12 to be accessed using its unit ID, it becomes possible to access much vaster SSU space, i.e., extended SSU space.

In the DMA mode access, the unit ID of a shared storage module 10 to be accessed is designated by the DID in the start transfer command SC shown in Figures 8 and 9 and the shared storage module is addressed by the following address A. Therefore, theoretically, it becomes possible to access extended SSU space having a capacity of $2^n$ (n is an address bit width of central processing unit 18 plus a bit width of the unit ID). That is, the extended SSU space forms extended spaces which are distinguished by the unit ID numbers serving, as identifiers.

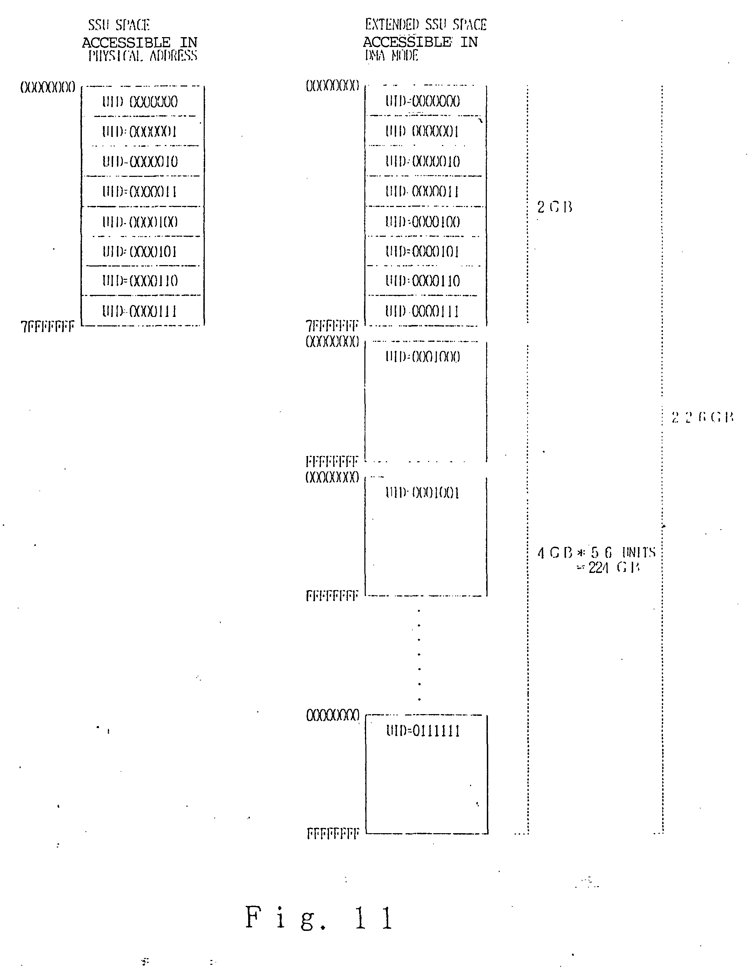

Figure 11 is a diagram for explaining the SSU space which has been mapped into the physical address space of the processor module 10 and the extended SSU space which is accessible only in the DMA mode.

In Figure 11, the number of bits of each of the unit ID numbers of the shared storage modules 12 constituting the extended SSU space is seven, and 64 unit ID numbers, 0000000 to 0111111, are assigned to the shared storage modules 12.

Here, eight unit ID numbers, 0000000 to 0000111, which are accessible in the program mode and the DMA mode are assigned to the 2-GB physical address space to be used for configuration definitions of the shared storage modules 12 constituting duplicate-shared storage (described later). The remaining 56 unit ID numbers corresponding to 56 SSU modules used in DMA mode are each assigned 4 GB. As a result, the extended SSU space of 226 GB in total can be accessed in the DMA mode.

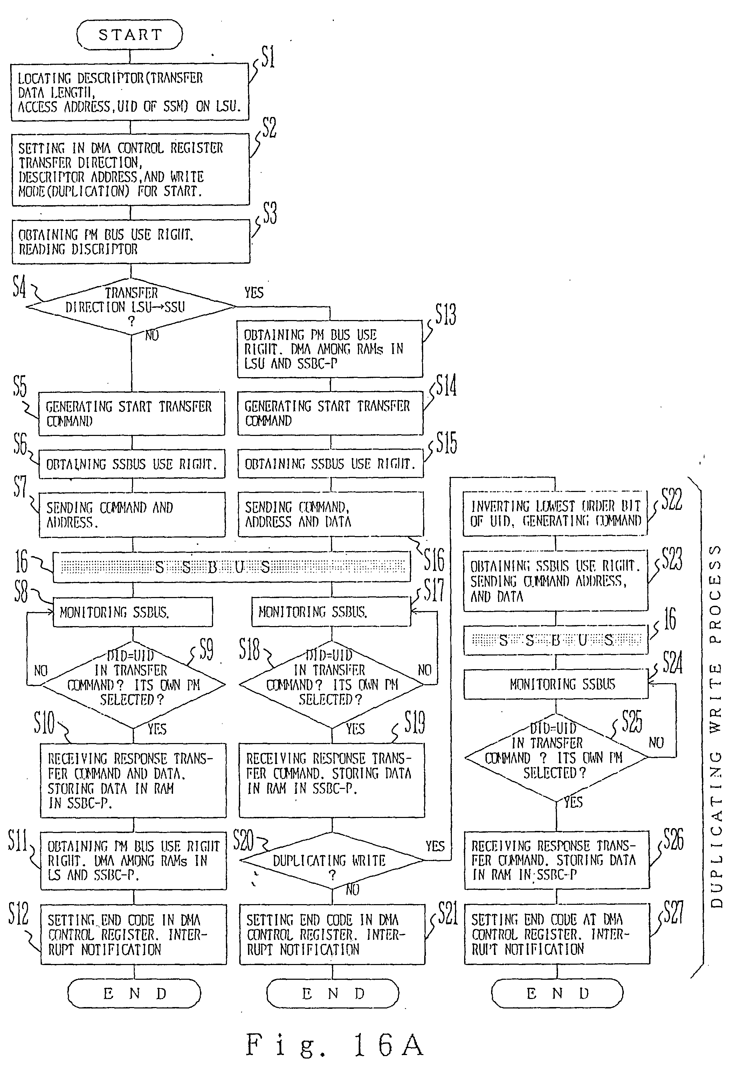

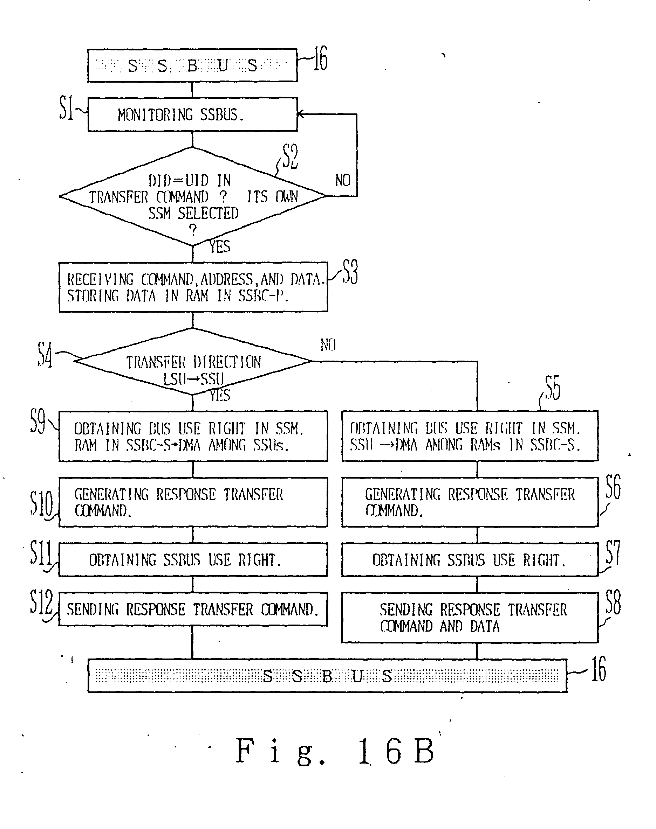

Of course, the number of unit ID numbers is not limited to eight as shown in Figure 11, and 16 shared storage modules 000000 to 0001111, may be used to fully form dupliate-shared storage space (non-extended 2-GB space).

Moreover, by increasing the number of bits of the unit ID or the rate of assignment of the unit ID numbers to the shared storage modules 12, it is possible to extend the extended SSU space with the DMA mode access.

Although the SSU space of the present embodiment, which is accessible by the physical addresses, is formed by more than one shared storage module 12, all the memory devices for the SSU space need not be packaged; unpackaged areas may also exist. In addition, all or part of the SSU space may be duplicate-configured for fault-tolerance.

The unpackaged areas and the duplicate configuration, as shown in the SSU space of the processor modules 10 of Figure 10, can be realized by dividing the SSU space of the processor modules 10 into partial SSU spaces and defining relationship with the shared storage modules 12 for each of the partial SSU spaces, that is, relationship with the shared storage modules 12 having the unit ID numbers 0000000 to 0000111 forming the extended SSU space shown in Figure 11.

In the embodiment of Figure 10, the 2-GB SSU space is divided into 8 spaces each of 256 MB and the configuration definitions indicating the correspondence relationship of each of the partial SSU spaces #0 to #7 to the shared storage modules 12 are given.

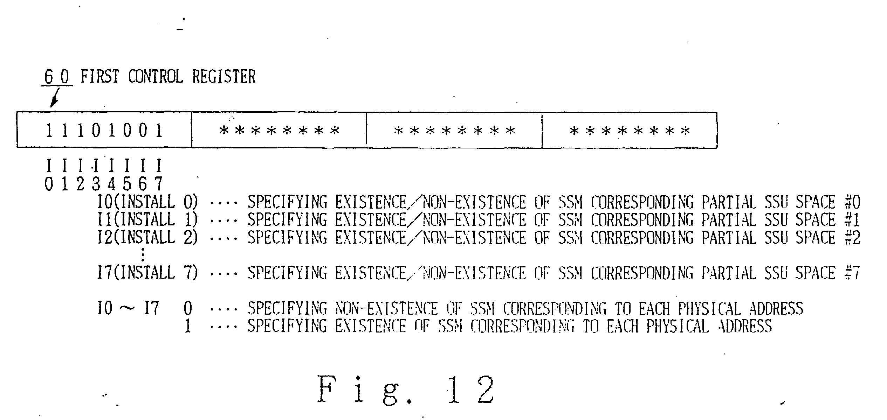

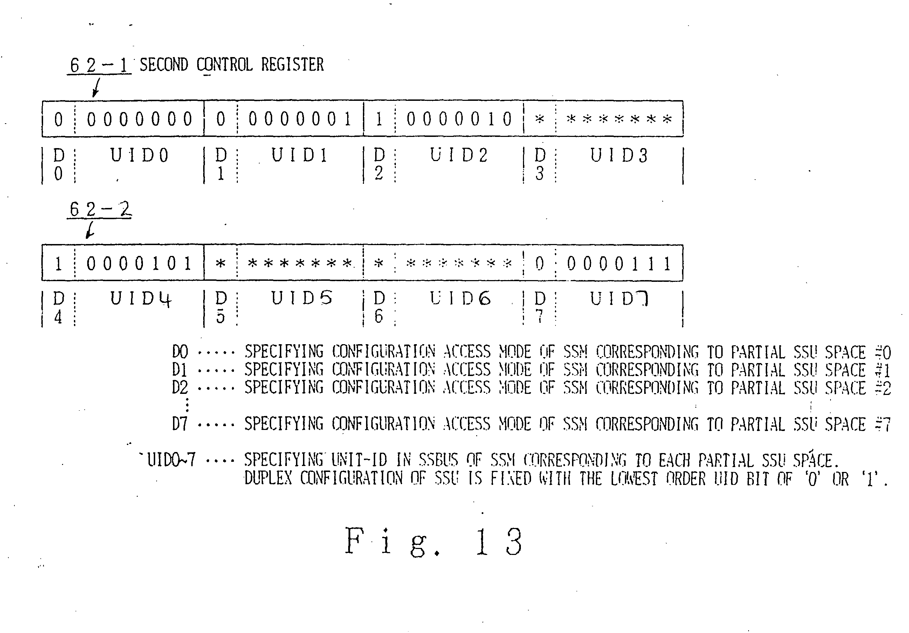

The configuration definitions of the shared storage modules 12 are realized by operating the configuration definition register 44 (refer to Figure 5) built in each connection unit 22. The configuration register 44 is constructed from a first control register 60 shown in Figure 12 and second control registers 62-1 and 62-2 shown in Figure 13.

The first control register 60 of Figure 12 specifies the presence or absence of the shared storage modules 12 corresponding to the SSU space divided into 8 spaces each of 256 MB as shown in Figure 10, in other words, whether the shared storage modules 12 are packaged or unpackaged. In this embodiment, Figure 12 indicates that five partial SSU spaces #0, #1, #2, #4, #7 corresponding to I0, I1, I2, I4, I7 each indicated by a high bit "1" have been packaged and three partial SSU spaces #3, #5, #6 corresponding to I3, I5, I6 each indicated by a low bit "0" have not been packaged.

The second control registers 62-1 and 62-2 shown in Figure 13 specify which of the shared storage modules 12 correspond to the partial SSU spaces indicated by high bits in the first control register 60 and have thus been packaged, the simplex or duplicate configuration and the access sequence when the duplicate configuration is specified.

In this embodiment, only bits D0, D1, D2, D4, and D7 corresponding to the partial SSU spaces #0, #1, #2, #4 and #7 are valid and specify the configurations of corresponding shared storage modules 12 and access forms. That is, bits DO, D1 and D7 are 0s, indicating that the partial SSU spaces #0, #1 and #7 are of simplex configuration. When partial SSU spaces #0, #1 and #7 are accessed, the shared storage modules 12 identified by the unit IDs= 0, 1, 7 are accessed.

On the other hand, bits D2 and D4 are "1", defining the duplicate configuration. When the partial SSU spaces #2 and #4 of duplicate configuration are accessed, data is read from the shared storage modules identified by the unit ID2 and the unit ID4.

The shared storage modules of duplicate configuration are written into as follows. In the first writing, a shared storage module 12 identified by the unit ID in the second control register 62-1 and 62-2 is written into and, in the second writing, another shared storage module 12 is written into which has the unit ID in which a specific bit in the first unit ID, for example, the least significant bit is inverted.

A pair of duplex shared storage modules 12, which can be specified by the second control register 62-1 and 62-2 to take the duplex configuration, has unit ID numbers which are equal except for their least significant bits, e.g. 0000100 and 0000101.

In the embodiment of Figure 13, two partial SSU spaces #2 and #4 are specified by bits D2 and D4 = 1 to take duplex configuration. For the partial SSU space #2, the following pair is set.

| Partial SSU space | Unit ID |
|---|---|
| #2 | 0000010 |
| #3 | 0000011 |

For the partial SSU space #4, the following pair is set.

| Partial SSU space | Unit ID |
|---|---|
| #4 | 0000100 |
| #5 | 0000101 |

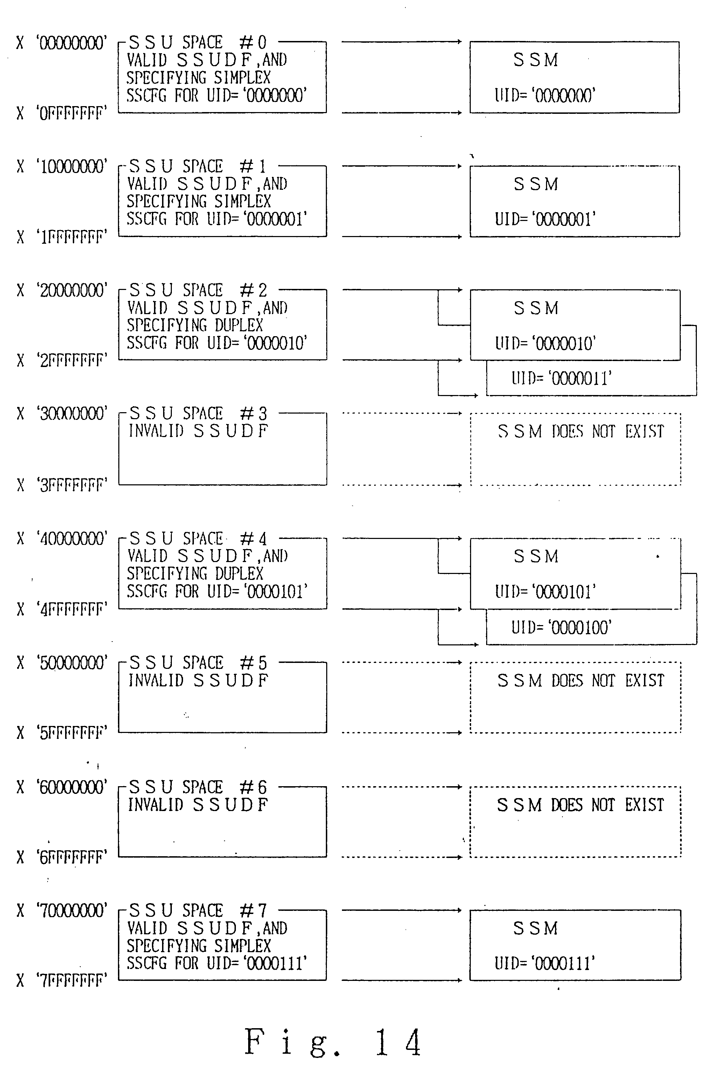

Figure 14 is a diagram for explaining the packaged state and configuration definitions of the shared storage modules 12 which are based on the specifications by the first and second control registers of Figures 12 and 13.

Eight shared storage modules 12 are provided to correspond to the SSU spaces #0 to #7 of the processor modules 10, but the shared storage module corresponding to the SSU space #6 is not packaged. Since the SSU spaces #3 and #5 are duplicated with the shared storage modules of the SSU spaces #2 and #4, respectively, no shared storage modules 12 corresponding to the SSU spaces #3 and #5 exist. The remaining SSU spaces #0, #1 and #7 have a one-to-one correspondence with the shared storage modules 12 because of their simplex configuration..

By dividing the SSU space which can be accessed by the physical addresses of the processor modules 10 and giving configuration definitions thereof as described above, it becomes possible to specify validity/invalidity or simplex/duplex configuration of the shared storage modules for each of the divided SSU space units even when the system is implemented.

In this embodiment, in the program mode in which the SSU spaces are directly accessed by the physical addresses based on the central processing unit software instructions, four bits b0 to b3 in the 32-bit SSU space address serve as a selector for the shared storage modules 12 and the remaining 28 bits b4 to b31 serve as an address of the shared storage units 12.

Where the memory capacity built in the shared storage modules 12 exceeds 256 MB, the meaning of the selector for selecting from among the shared storage modules 12 remains unchanged, but the internal addresses of the shared storage modules 12 are made to correspond to the memory capacity built into the shared storage modules 12. When, for example, the memory capacity is 512 MB, i.e. double 256 MB, 29 bits b3 to b31 of address information are used to designate internal addresses of the shared storage modules 12. When the memory capacity is 1 GB, 30 bits b2 to b31 are used to designate internal addresses of the shared storage modules 12. Moreover, when the memory capacity is extended up to 2GB, 31 bits are all used to designate internal addresses of the shared storage modules. Where the memory capacity of the shared storage modules 12 exceeds 256 MB, the number of bits of the selector for selecting from among the shared storage modules decreases as described above. Thus, the same unit ID will be specified for the partial SSU spaces divided into 256-MB units.

[Access Mode]

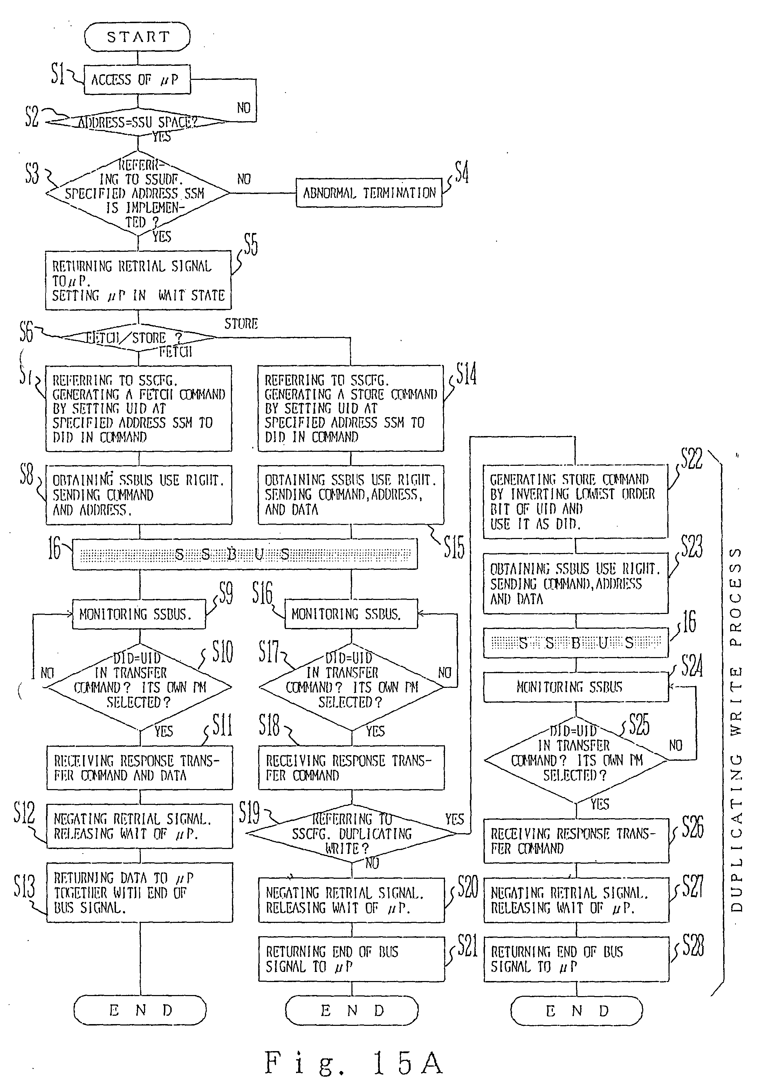

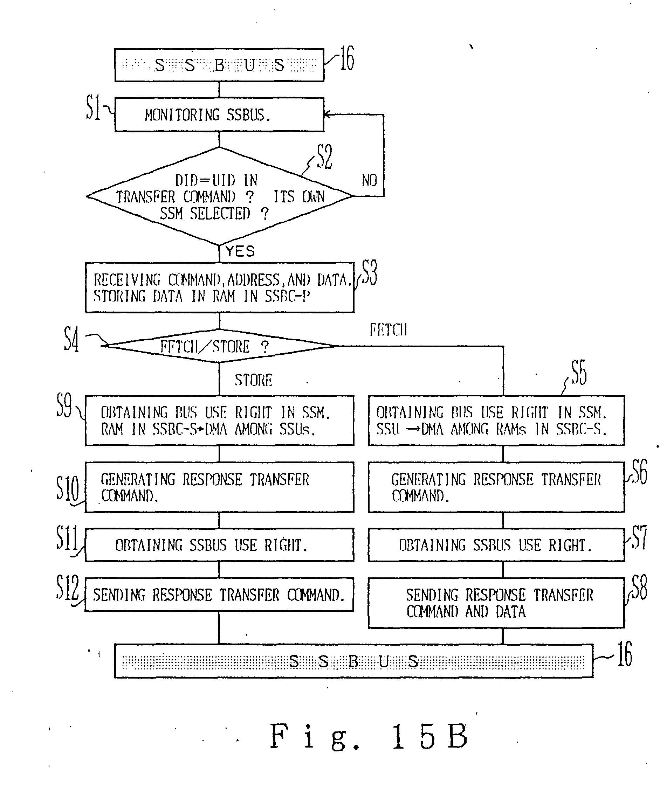

In an embodiment of the present invention, access in the program mode is made in accordance with flowcharts shown in Figures 15A and 15B.

In Figure 15A, software accesses the SSU space as an instruction of the central processing unit 18 in step S1. In step S2, the connection unit 22 decides which of the shared storage units 12 has the addressed SSU space on the basis of four address bits b0 to b3 from the central processing unit 18 and the contents of the second control registers 62-1 and 62-2 for giving configuration definitions of the shared storage modules 12. Moreover, a decision is made in step S3 as to whether or not the shared storage module 12 specified by the contents of the first control register 60 has been packaged. If it has not, the operation will be terminated abnormally in step S4.

When it is decided in step S3 that the shared storage module 12 specified by the first control registers is packaged, the connection unit 22, in step S5, returns a retry signal to the central processing unit 18, so that the central processing unit 18 is placed in the wait state.

In step S6, a decision is made as to whether an instruction from the central processing unit 18 is a fetch instruction to read data from the shared storage module 12 or a store instruction to write data into the shared storage module 12.

If the instruction from the central processing unit 18 is a fetch instruction, a start transfer command SC is generated in step S7 from the contents of the second control registers 62-1 and 62-2 with the unit ID of the destination shared storage module used as the DID. After the bus right for the shared system bus 16 has been acquired in step S8, the start transfer command SC and address A are transmitted to the shared system bus 16.

If, on the other hand, it is decided in step S3 that the instruction is a store instruction, a start transfer command SC is likewise generated in step S14 from the contents of the second control registers 62-1 and 62-2 with the unit ID of the destination shared storage module used as the DID. In step S14, the start transfer command SC, address A and data D to be written into are sent onto the shared system bus 16 after acquisition of the bus right for the shared system bus 16.

In the shared storage module 12, on the other hand, as shown in the flowchart of Figure 15B, the connection unit 28 monitors the shared system bus 16 in step S1 and compares its unit ID with the DID in the start transfer command in step S2. When the comparison indicates equality, receive data is written into the built-in dual port RAM 56 in step S3.

In step S4, it is determined whether the instruction is a fetch instruction or a store instruction.

If it is a fetch instruction, in step S5 the connection unit 28 permits data transfer between the dual port RAM 56 and the shared storage unit 26 under the control of the internal bus control circuit 64 in step S5 after acquisition of the bus right for the internal bus 30. In step S6, the connection unit 28 responds to the source processor module 10 at the termination of data transfer within the shared storage module 12.

That is, a response transfer command EC containing a end code is generated in step S6, bus right for the shared system bus 16 is acquired in step S7, and then the response transfer command EC and readout data D are sent onto the shared system bus 16 in step S8.

If in step S4 the instruction is determined to be a store instruction, the connection unit 28 permits data transfer between the dual port RAM 56 and the shared storage unit 26 in step S9 under the control of the internal bus control circuit 64 after acquisition of the bus right for the internal bus 30. The connection unit 28 responds to the source processor module 10 at the termination of the data transfer (the writing of data) within the shared storage module 12.

That is, a response transfer command EC containing a end code is generated in step S10, the bus right for the shared system bus 16 is acquired in step S11 and then the response transfer command EC is sent onto the shared system bus 16 in step S12.

Returning to the flowchart of Figure 15A for the processor modules 10, the connection unit 22 monitors the shared system bus 16 as indicated in step S9 or S16 and compares its own unit ID with the DID in the response transfer command EC in step S10 or S17. When the comparison indicates equality in step S10 or S17, the response transfer command EC and data D are received in step S11 for a fetch instruction or the response transfer command EC is received in step S18 for a store instruction.

In subsequent step S12 or S20, a retry signal issued to the central processing unit 18 is withdrawn, so that the wait state of the central processing unit 18 is canceled. For a fetch instruction, an end signal DC of the internal bus 24 is returned to the central processing unit 18 together with received data D in step S13. For a store instruction, an end signal DC of the internal bus 24 is returned to the central processing unit 18 in step 20.

One access in the program mode is thus terminated.

The duplex writing process in steps S19 and S22 to S28 of Figures 15A will be clarified later.

Next, reference is made to the flowcharts of Figures 16A and 16B to describe access in the DMA mode in an embodiment of the present invention.

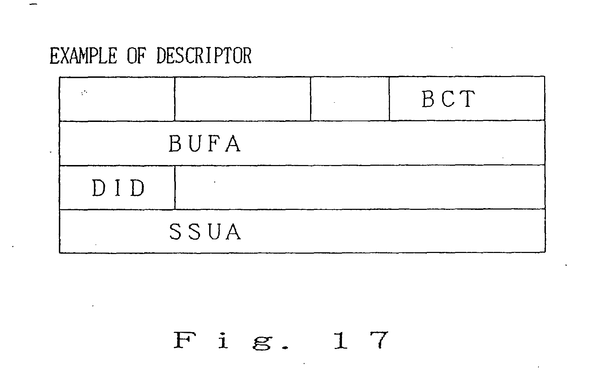

For access in the DMA mode, in step S1 of Figure 16A, the central processing unit 18 first places on the main memory 20 of the processor module 10 a descriptor containing control contents, such as the unit ID of a destination shared storage module 12, an access address, the transfer length, etc., shown in Figure 17.

That is, in the descriptor of Figure 17, the BCT (Byte Count) indicates the number of transfer bytes, the buffer address BUFA indicates the start physical address of the data buffer placed on the local storage unit 20, and the DID indicates the unit ID of a shared storage module which is a candidate for access. Moreover, the SSUA indicates a relative address (an internal address within the shared storage module 12 specified by the DID) within the shared storage module 12 to be accessed, which differs from the physical address of the SSU space in the program mode.

After placement of the descriptor in step S1, the direction of transfer, control such as duplex writing into the shared storage modules 12 and the address of the descriptor on the local storage unit 20 is set in the DMA control register 50 of the DMA control circuit 34 in the connection unit 22 in step S2, thereby starting DMA mode access.

When the DMA mode access is started in step S2, the connection unit 22 acquires the bus right for the internal bus 24 of the processor module 10 and becomes a bus master. Thus, the connection unit 22 is permitted to directly access the local storage unit 20 under the control of the DMA control circuit 34 to thereby read the descriptor from the local storage unit 20 and permit data transfer from the local storage unit 20 to the dual port RAM 38 in the connection unit.

After termination of data transfer to the dual port RAM 38 in the connection unit 22, the direction of data transfer is checked in step S4. If the transfer direction is the readout data transfer direction, i.e. from the shared storage module 12 to the local storage unit 20 (hereinafter referred to as (SSU - LSU) direction), a start transfer command SC containing the unit ID of the shared storage module 12 and the length of transfer as shown in Figure 7 is generated by the transmitter-receiver circuit 36 in step S5. On the other hand, if the transfer direction is the write data transfer direction, i.e. from the local storage unit 20 to the shared storage module 12 (hereinafter referred to as (SSU - LSU) direction), the transfer start command SC is likewise generated by the transmitter-receiver circuit 36 in step S13.

Subsequently, the transmitter-receiver circuit 36 acquires the bus right for the shared system bus 16 in step S6 or S14.

If the transfer is in the (SSU - LSU) direction, the operation proceeds from step S6 to step S7, so that the start transfer command SC and the address A are sent onto the shared system bus 16. If the transfer is in the (LSU - SSU) direction, the operation proceeds from step S15 to step S16, so that the start transfer command SC, address A and data D are transmitted to the shared system bus 16.

On the other hand, the connection unit 28 of the shared storage module 12 monitors the shared system bus 16 in step S1 of Figure 16B and compares its unit ID with the DID in the start transfer command DC in step S2. When the comparison indicates equality, the connection unit writes received data into the dual port RAM 56 in step S3.

Next, the transfer direction is checked in step S4. When the transfer is in the (LSU - SSU) direction, the operation proceeds to step S5. When the transfer is in the (SSU - LSU) direction, the operation proceeds to step S9. In step S5 or S9, the internal bus control circuit 64 of the DMA control circuit 52 in the connection unit 28 acquires the bus right for the internal bus 30, so that data transfer is permitted between the dual port RAM 56 and the shared storage unit 26. In this case, data is read from the shared storage unit 26 in step S5, while data is written into the shared storage unit 26 in step S9.

When access in the DMA mode is terminated in step S5 or S9, the response transfer command EC containing the end command shown in Figure 7 is generated in step S6 or S10 and the bus right for-the shared system bus 16 is acquired in step S7 or S11. Then, the operation proceeds to step S8 or S12. That is, in step S8 in which (LSU - SSU), readout data D is added to the response transfer command EC and then transmitted to the shared system bus 16. In step S12 in which (SSU-LSU), the response transfer command EC is transmitted to the shared system bus.

Returning now to the flowchart of Figure 16A for the processor modules 10, the connection unit 22 of the processor module 10 monitors the shared system bus 16 as in step S8 or S17. When equality is found between its unit ID and the DID in the response transfer command, the operation proceeds to step S10 or S19 for a receiving operation. The received data is stored in the dual port RAM 38 in the connection unit 22 in step S10.

Subsequently, for transfer in the (SSU - LSU) direction, the bus right for the internal bus 24 is acquired in step S11, so that data D received by the dual port RAM 38 is transferred to the local storage unit 20 under the DMA control. Finally, the end code is set in the DMA control register 50 in step S12 and the completion is notified to the central processing unit 18 as an interruption signal.

For transfer in the (LSU - SSU) direction, the operation proceeds to step S21 via step S20, whereby the end code is set in the DMA control register 50 and the completion is notified to the control processing unit 18 as an interruption signal.

One-time access in the DMA mode is thus terminated.

The duplex writing process in steps S20 and S22 to S27 will be clarified later.

[Duplex Access]

The shared storage modules 12 constituting the SSU space of the present invention can be duplicated for fault-tolerance. When duplex shared storage modules 12 are accessed, the writing operation is performed on both of the duplex shared storage modules, while the reading operation is performed on one of the shared storage modules 12.

The write access to the duplex shared storage modules 12 is carried out by hardware control of the connection unit 22 in response to one access instruction from the central processing unit 18 based on software. The write access to the duplex shared storage modules 12 is not made simultaneously for reasons of hardware control. That is, the writing operation is first performed on one of the shared storage modules 12 and, when the first writing operation is completed, the other is written into. The specific accessing methods vary between the program mode and the DMA mode.

The duplex accessing method in the program mode is performed in accordance with the process in steps S19 and S22 to S28 shown in Figure 15A.

That is, the first store access is processed in the same manner as in the simplex configuration. When, in step S18, a response transfer command EC indicating normal termination is received at the termination of the first write access to the shared storage module 12, a reference is made in step S19 to the second control registers 62-1 and 62-2, which define configuration of the shared storage module.

Into the second control registers 62-1 and 62-2 are entered a bit for specifying the duplex configuration of shared storage modules, the unit ID of a shared storage module to be read from and the unit ID of a shared storage module to be written into first.

When a reference is made to the second control registers 62-1 and 62-2, if the shared storage module to be accessed is defined as simplex configuration, then the connection unit 22 terminates the write access to the shared storage module and the operation is proceeded to step S20.

When the duplex configuration is defined, in step S22, a transfer start command SC for store is generated as a DID which is equal, except in its least significant bit, to the unit ID of the shared storage module, which is specified first in the second control registers and has already been subjected to access.

In subsequent step S23, the bus right for the shared system bus 16 is acquired to transmit the start transfer command SC, address A and data D which is the same as that in the first access and accesses the other of the duplex-configured shared storage modules.

In the second access, as for the first access, the process indicated in steps S1 to S4 and S9 to S12 of Figure 15A is performed by the shared storage modules and, finally, a response transfer command EC containing a end code is transmitted to the shared system bus 16.

Data transferred from the shared storage module is monitored in step S24 of Figure 15A and, when equality is found between its own unit ID and the DID in step S25, the response transfer command EC is accepted in step S26. Thereby, as in steps S12 and S13, a set of store accesses to the duplex-configured shared storage modules is terminated.

By setting configuration definitions of the shared storage modules 12 in the second control registers 62-1 and 62-2 as described above, when the central processing unit 18 makes program-mode access (access to the SSU space) to a physical address of a shared storage module 12 on the basis of software, the processor-side connection unit 22 checks whether the shared storage unit 12 is of simplex configuration or duplex configuration and is able to automatically change the unit ID to make the second access at the termination of the first access if it is of duplex configuration.

Even if a shared storage module 12 specified in the second control registers 62-1 and 62-2 is defined as being in the duplex configuration, one of the duplex shared storage modules may be disabled against access because of a fault therein. A situation in which a compressed operation has to be temporarily employed can be coped with by changing the operation mode of the second control registers from the duplex configuration mode to the simplex configuration mode when the abnormal end code is found in the response transfer command EC obtained at the termination of access.

When, at the time of double-mode access, access to shared storage modules 12 is terminated abnormally, it is possible to check the presence or absence of equality of the contents of two duplex shared storage modules as well as the access sequence based on the unit ID of the abnormal shared storage module 12 and the contents of the second control registers 62-1 and 62-2. In the program mode in particular, since the , success or failure in access can be basically recognized on a word-by-word basis, even if data equality is lost between the duplex-configured shared storage modules 12, the recovery process has only to be performed taking into account unequal words and the shared storage module 12 which has failed to be accessed.

Next, the DMA-mode duplex accessing method is illustrated in steps S20, S22 to S27 of Figure 16A.

That is, the first DMA access in which data transfer is in the (LSU - SSU) direction is processed in the same manner as in the simplex configuration. After a response transfer command EC indicating normal termination of the first access to the shared storage module 12 is received in step S19, the presence or absence of the definition of duplex writing is checked in step S20.

Although the DMA-mode access is started by selecting an object shared storage module 12 and specifying an access address of the shared storage module 12 and the length of transfer, the direction of transfer and simplex/duplex configuration are specified in the DMA control register 50 of the connection unit 22 every time an access is started.

For this reason, in step S20, reference is made to the DMA control register 50 defining the configuration of the shared storage module 12 to check the presence or absence of the definition of duplex writing.

As a result of the reference to the DMA control register 50, if the shared storage module to be accessed is defined as being in the simplex configuration, the process advances to step S21 and the connection unit 22 terminates access to the shared storage module 12 with only one write access.

However, if the duplex configuration is defined, a transfer start command SC for writing is generated in step S22 and has the same DID, except for its least significant bit, as the unit ID of the shared storage module, which is first designated in the DMA control register 50 and has already been accessed. In subsequent step S23, the bus right for the shared system bus is acquired to transmit the start transfer command SC, address A and data D which is the same as that in the first access to the shared system bus 16, and makes DMA write access to the other of the duplex-configured memory modules.

In the second DMA access, as with the first, the process in steps S1 to S4 and S9 to S12 shown in Figure 16B are performed by the shared storage modules, and finally a response transfer command EC containing a end code is transmitted to the shared system bus 16.

That is, data transferred from the shared storage module is monitored in step S24 of Figure 16A and, when an equality is found between its own unit ID and the DID in step S25, the response transfer command EC is accepted in step S26. As in steps S11 and S12, DMA access writing into the duplex shared storage modules is terminated in steps S26 and S27.

As with the duplex writing in the program mode, in the DMA mode as well, if the mode of operation is specified, the duplex writing is automatically performed by the hardware.

Where abnormal termination occurs during DMA access to the duplex shared storage modules, it is possible to check data equality between two duplex shared storage modules as well as the access sequence based on the unit ID being accessed and the least significant bit of the unit ID of the shared storage module specified at the time of the first access.

Although more than one processor module is indicated in the embodiment of Figure 2, the system may comprise a single processor module.

[Asynchronizing the program mode]

In the program mode in an embodiment of the present invention in which an SSU space is accessed, a write/read process and the execution of an instruction are completed synchronously, that is, by the synchronous access method, as shown in Figure 15A. If accesses are grouped in block units, responses to accesses can be returned at a higher speed. Additionally, the utilization of the shared system bus 16 can be reduced, thereby improving the system performance. When accesses to an SSU space are grouped in block units, a write process and the execution of an instruction are completed asynchronously.

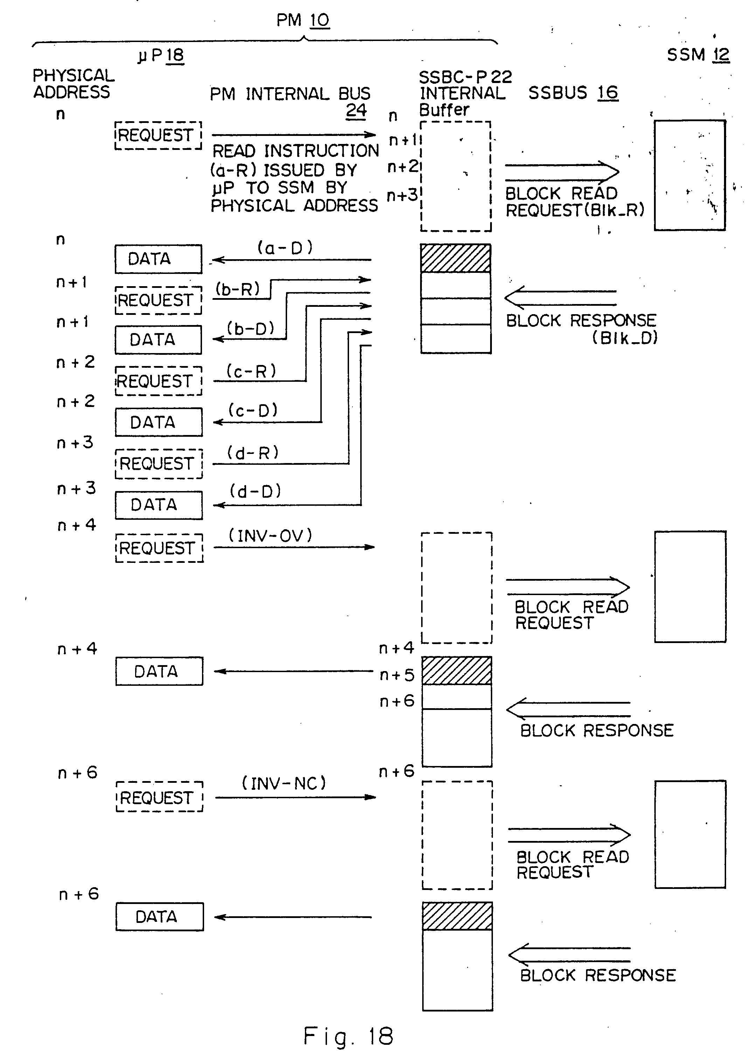

Figure 18 is a block diagram for explaining the operation in which a reading operation is performed as a block access to the shared storage module 12 in the asynchronous program mode.

In Figure 18, in response to a one-word read request (a-R) issued according to software to the shared storage module 12 by the central processing unit (μP) 18 of the processor module 10, the connection unit 22 issues a block read request (Blk-R) having the leading address n to the shared storage unit 12 through the shared system bus 16. In this embodiment, the block read request (Blk-R) comprises four words, that is, address n, n+1, n+2, and n+3.

The connection unit 28 on the side of the shared storage unit 12 receives the block read request (Blk-R) transmitted from the shared system bus 16, and sends to the connection unit 22 of the processor module 10 the data comprising four words (Blk-D), that is, address n, n+1, n+2, and n+3, read from the shared storage unit 26.

The connection unit 22 of the processor module 10 receives the data (Blk-D), stores it in the buffer (dual port RAM 38) in the connection unit 22, and returns to the central processing unit 18 data (a-D) corresponding to the read address n in the shared storage module 12.

If subsequent access requests refer to serial areas (b-R), (c-R), and (d-R), data (b-D), (c-D), and (d-D) can be returned quickly from the buffer in the connection unit 22 because they are already stored in the buffer of the connection unit 22 by the previous block access.

Data stored in the buffer of the connection unit 22 are invalidated when the next access request refers to an area (INV-OV) not located in the buffer as indicated by the physical address n+4, or when it does not refer to a serial address (INV-NC) as indicated by the physical address n+6. In these cases, the shared storage module 12 is accessed in the program mode in which data are accessed in word units, only the data at the corresponding addresses among the read block data are returned to the central processing unit 18.

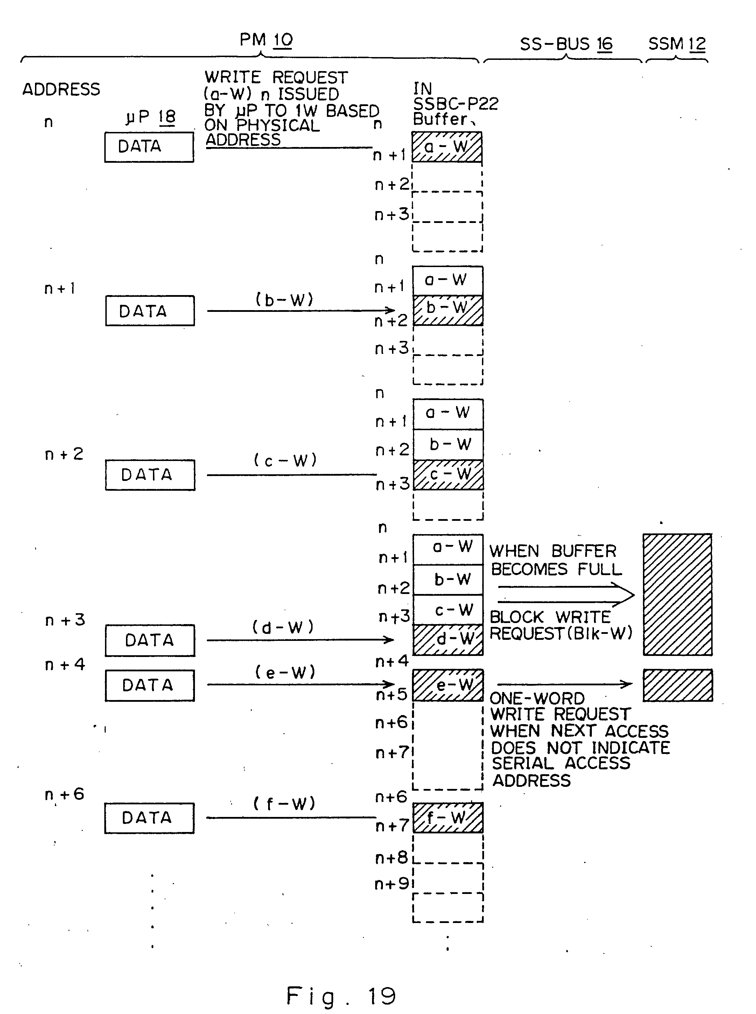

Figure 19 shows an SSU writing operation in the asynchronous program mode in an embodiment of the present invention in which data are accessed in block units.

In Figure 19, a write request (a-W) and data issued according to software to the shared storage module 12 at the physical address n by the central processing unit

($\mu$P) 19 of the program module (PM) 10 are stored in the buffer (dual port RAM 38) in the connection unit 22. Four-word write requests (b-W), (c-W), and (d-W) having serial addresses as indicated by the physical addresses n+1, n+2, and n+3 are issued to the buffer of the connection unit 22. When the buffer becomes full, a block write request (Blk-W) is issued to the shared storage module 12 by the connection unit 22 through the shared system bus 16. Thus, the block is written to the storage.

When a condition of a write request (e-W) not having a serial access address as indicated by the physical address n+4 is detected, a write request (E-W) in the program mode in which data are transmitted in word units is issued to the shared storage module 12. Thus, the data are written in word units.

In an embodiment of the present invention, since block write instructions are executed asynchronously, processes for exceptions detected after the completion of an instruction (for example, an access to an SSM area which is not installed , a hardware error on a system bus, etc.) should be considered. Asynchronous execution of instructions means that the completion of a write instruction execution and that of the actual writing operation are performed asynchronously. When an exception is detected in the synchronous operation of instructions, the software can recognize according to the data stored in the stack as easily as in the prior art technology as to what instruction has failed if an exception interrupt is generated synchronously with the instruction. However, since the asynchronous operation of instructions such as a block write instruction can be performed in the present embodiment, a defective instruction cannot be recognized usually. Therefore, when an exception has arisen, that is, when an actual write by hardware has failed, a recovery process is required upon the rejection of a write process in the asynchronous operation of instructions.

To simplify the software recovery process of the present embodiment, a write serialize instruction is provided to ensure the completion of a write process and is added to the end of the write instruction. When the write serialize instruction is issued, the hardware immediately executes the write request stored in the buffer, and completes the execution of the serialize instruction. The serialize instruction is completed when the write process is completed. If an exception has arisen during the writing operation, an exception interrupt is generated synchronously with the serialize instruction. Accordingly, a write to hardware and the execution of the instruction can be performed synchronously if a serialize instruction is added to the end of a specific write unit (more specifically, a write instruction unit). That is, executing a serialize instruction means completing an actual writing process by hardware.

Some write processes do not have serial addresses and are performed as one-word writing operations, while those having serial addresses are performed as block writing operations.

The physical address n+4 shown in Figure 19 is followed by an access to n+6. Then, a write request (E-W) is issued to the shared storage module 12 when a condition of a write request (e-w) not having a serial address is detected or when the serialize instruction is issued. Thus, the data stored in the buffer are written to the storage.

When a block is transmitted to a shared storage, the execution of an instruction is completed synchronously when read data in the reading operation reach the CPU. However, since a write operation is performed by writing data to the storage after the completion of the execution of a CPU instruction, an appropriate action must be taken when an exception (for example, a parity error detected in a bus or a program exception, etc.) has arisen at the time of a write process.

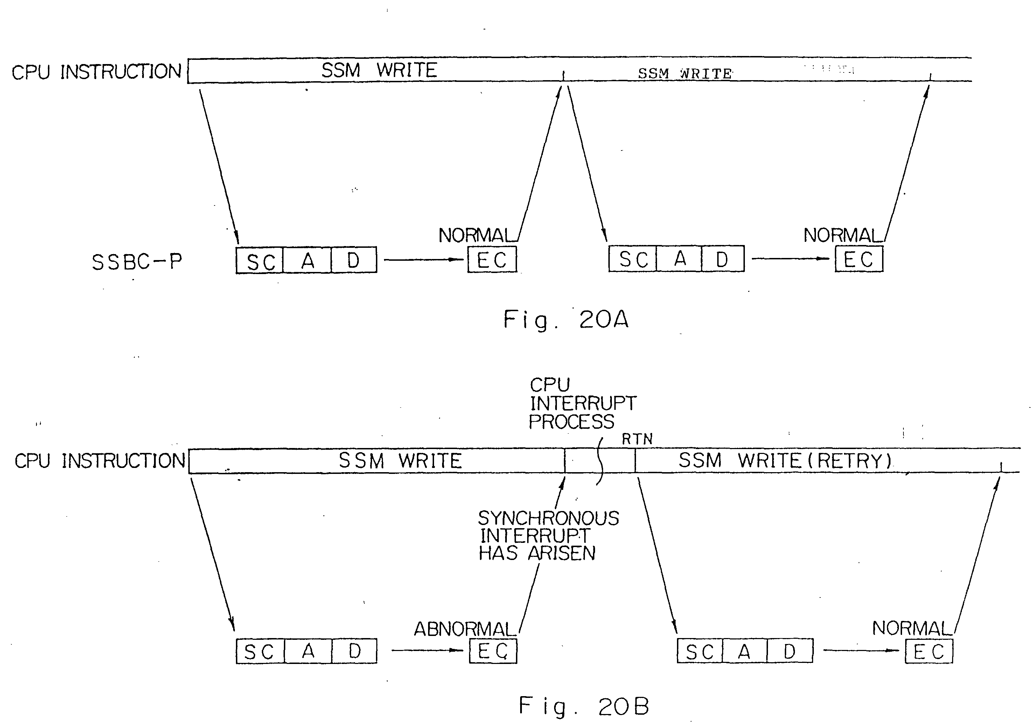

Conventionally, a command (SC), an address (A), and write data (D) are outputted from an SSBC-P to an SSM if only an SSM write instruction is issued as a CPU instruction when the SSM write instruction and a process of writing to a storage are performed synchronously as shown in the timing charts in Figures 20A and 20B. When the writing operation is performed normally, an end command (EC) indicating the normal state is returned to the CPU side through the SSBC-P as shown in Figure 20A. However, when the writing operation is performed abnormally, an end command (EC) indicating the abnormal state is returned to the CPU side through the SSBC-P. In this case, the above described synchronous interrupt is generated synchronously with the write instruction using the synchronous instruction interrupt mechanism provided for the CPU. After storing an access address and data to be stored into a stack, etc., the CPU branches to an interrupt routine. An interrupt handler obtains information required to recover a retry process from stack information. When a process of retrying a writing operation to the SSM is performed successfully, an EC is returned. In such a conventional method of a synchronous writing, the CPU cannot execute other instructions in writing to the SSM, thereby taking much time in executing all instructions.

By contrast, in the operation of an embodiment the present invention (rejection of a write process), a CPU instruction goes ahead, and a write process is performed at a high speed. However, when an exception is detected, a write address and data to be stored may have been updated by an instruction after the rejected write process. Therefore, the necessary recovery cannot be performed by the conventional synchronous interrupt function provided for the CPU. That is, when a write process is rejected in an embodiment of the present invention and only the conventional function is used to recover the abnormal state, there are problems as follows:

① an exception is detected asynchronously with a CPU instruction, therefore, a simple instruction synchronous interrupt is not valid, and
② Information necessary for a recovery process does not exist at the time of the detection of an exception, and the recovery process cannot be performed.

The following architecture is provided by an embodiment of the present invention to solve the problem above:

(1) a serialize instruction for a write process

A serialize instruction is provided to write data to a shared storage. The serialize instruction is executed as an access to a specified address in the specific PM space. The execution of the serialize instruction is completed synchronously with a process of writing data to a shared storage which has been held back.

(2) a notification of an exception to be given to the CPU

An exception is notified to the CPU by the instruction synchronous interrupt function. The interrupt is synchronized with an access to a shared storage or with execution of a write serialize instruction of (1) above. When an interrupt is made synchronously with the execution of a serialize instruction, it means a failure in the very previous writing operation. When an interrupt is made synchronously with an access to a shared storage (e.g. instruction A), it is not clear whether the interrupt is caused by that shared-storage access instruction (instruction A) itself (i.e. a "direct interrupt") or an immediately-preceding write instruction to the shared storage (instruction B) just before instruction A. To this end, a flag is set in the control register of the SSBC-P to determine whether the interrupt is caused by an access instruction which is the latest shared-storage access (instruction A) or an immediately-preceding write instruction (instruction B) .

Then, the flag is read as a control register in the SSBC-P to determine the cause of the interrupt.

(3) A recovery process

An instruction which has failed in its access can be specified by (1) and (2) above. However, the information necessary for a recovery process (a retry process) is not designated. To solve this problem, the SSBC-P keeps all the information relating to unsuccessful writes of block units. Furthermore, if there is a CPU instruction to retry kept accesses, there is a function to retry the kept accesses. According to the function, the interrupt handler can perform a recovery process without obtaining or analyzing the information about exceptions.

(4) Canceling a retrial

If an exception is caused by software, an exception will occur repeatedly when the above described function is used to recover the process. In such cases, the retries suspended by the SSBC-P must be canceled. When a control register for canceling the kept retries is provided in the SSBC-P and the interrupt handler determines that the system cannot be retried at all, the kept retries are canceled by accessing the register.

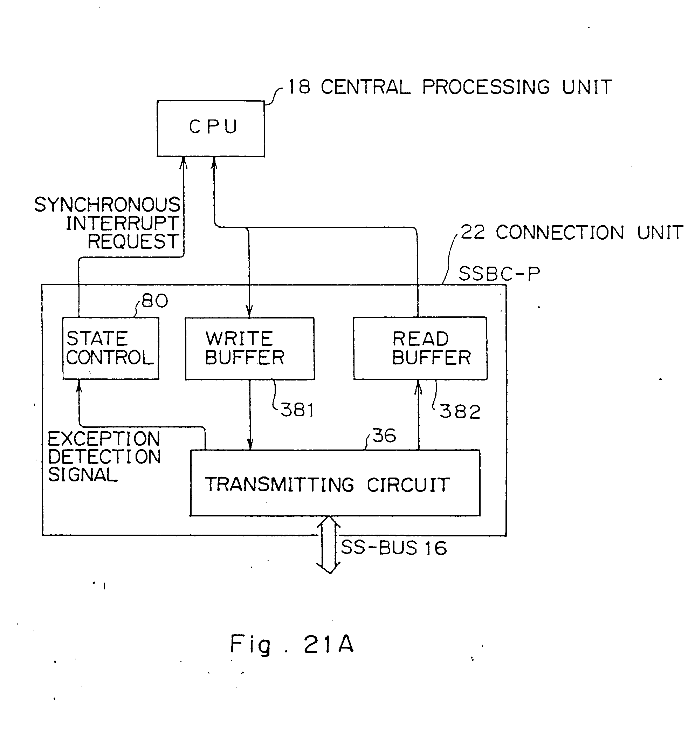

Figure 21A shows the configuration of the connection unit 22 (SSBC-P) associated with the processor. The connection unit 22 comprises a write buffer 381, a read buffer 382, and a transmitter-receiver circuit 36 for controlling the SS-BUS. It also comprises a state controller 80 for controlling the state corresponding to a write serialize instruction. When an access to a shared storage fails and an exception is detected, the state controller 80 inputs an exception detection signal and retries the access (recovery process) and issues a synchronous interrupt request to the CPU.

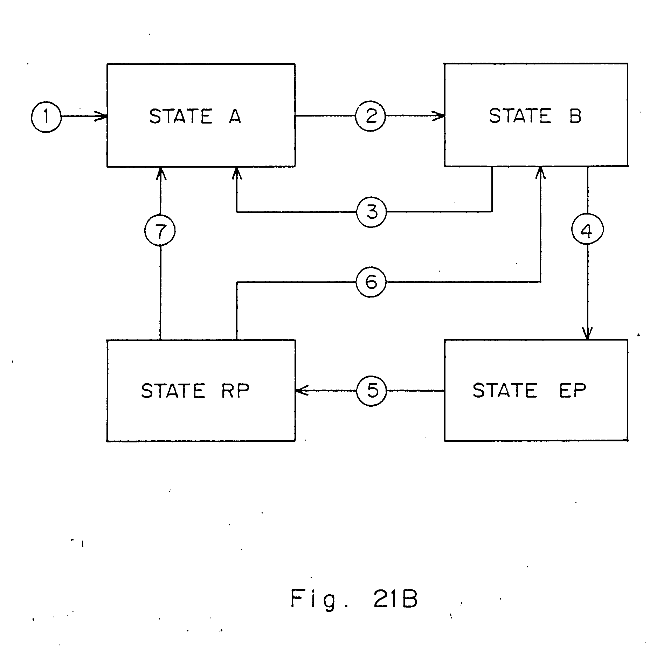

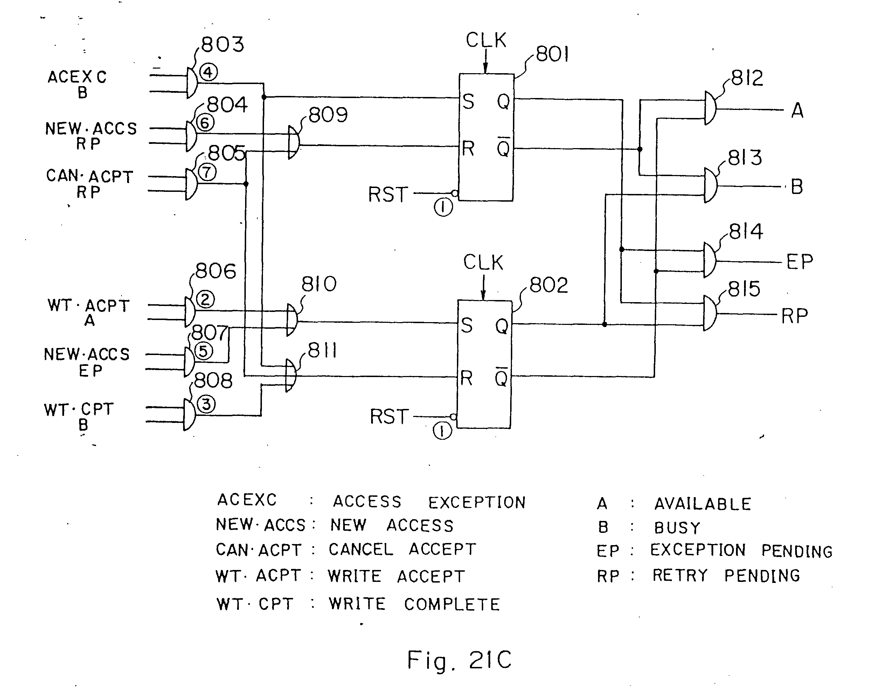

Figure 21B shows the state transition of the operation state of the state transition circuit shown in Figure 21C in the state controller 80 provided in the connection unit 22 (SSBC-P) for controlling a writing operation to a shared storage to realize the above described architecture. In the explanation below, each of the numbers ①- ⑦corresponds to the number indicated in the state transition diagram (Figure 21B) and the state transition circuit (Figure 21C). The states are briefly explained as follows.

State A (available): A new access is acceptable without a pending state.

State B (busy): The state at the time of an access to a shared storage until the end of the access.

State EP (exception pending): The exception (an interrupt has arisen) pending state after an access to a shared storage is completed abnormally.

State RP (retrial pending): The retrial pending state of an access to a shared storage in which the access has just failed.

Next, the transition of each state is explained by referring to the numbers ①- ⑦.

① The state is changed by initialization of PM (processing module). That is, an RST (reset signal) of flip flops 801 and 802 are set to 0, and the outputs Q and $\bar{Q}$ of the flip flops 801 and 802 are set to 0 and 1 respectively. Then, the states A, B, EP, and RP which are outputs of AND circuits 812, 813, 814, and 815 are (A, B, EP, RP) = (1, 0, 0, 0). This refers to state A.

②The state is changed by starting accepting a write to a shared storage. That is, when a write accept signal (WT ACPT) becomes 1 whilst A=1, the output ②of an AND circuit 806 becomes 1, a set input S of the flip flop 802 becomes 1 through an OR circuit 810. The outputs of AND circuits 803, 805 and 808 are all 0 if B=0 and RP=0, sots output of an OR circuit 811 is 0. Therefore, for flip flop 802 S equals 1 and R equals 0. Thus, the flip flop 802 is changed from a reset to a set with the values S and R set to 1 and 0 respectively. That is, the output Q equals 1 and $\bar{Q}$ equals 0. Since the flip-flop 801 is still in the reset state, its$\bar{Q}$ equals 1. Thus, the output of the AND circuit 813 changes to 1 from 0, that is, B equals 1. Also, $\bar{Q}$ of the flip flop 802 equals 0 and A turns to 0 from 1. Since the output Q of the flip flop 801 equals 0, the outputs EP and RP of the AND, circuits 814 and 815 are still 0. Therefore, (A, B, EP, RP) refers to (0, 1, 0, 0). This indicates state B.

③When a write to a shared storage is completed successfully, the state is changed. That is, since A equals 0 and EP equals 0 the outputs of the AND circuits 806 and 807 and the output of the OR circuit 810 are 0. And since the output of the AND circuit 808 becomes 1(WT.CPT has become 1), and the output of the OR circuit 811 becomes 1. Then, the flip flop 802 is changed to the reset state. Therefore, the flip flops 801 and 802 are both in the reset state, and (A, B, EP, RP) equal (1, 0, 0, 0).

④The state is changed when an exception is detected in an access to a shared storage. That is, when an access exception signal (ACEXC) is received, the output of the AND circuit 803 becomes 1 because B = 1. Since RP is 0 at this time, the outputs of AND circuits 804 and 805 and the OR circuit 809 are 0. Therefore, a set terminal S and a reset terminal R of the flip flop 801 are 1 and 0 respectively, thereby bringing about a set state. Since the flip flop 801 is in the set state, that is, $\bar{Q}$ = 0, and the flip flop 802 is in the reset state, that is, Q = 0, $\bar{Q}$ = 1, (A, B, EP, RP) equal (0, 0, 1, 0). This indicates state EP.

⑤When a new access instruction for accessing to a shared storage or a serialize instruction is executed in state EP, a synchronous interrupt is generated in the CPU, and the state is changed to RP, that is, the retrial pending state. That is, when EP = 1, the output of the AND circuit 807 indicates 1 if a new access signal (NEW ACCS) indicates 1. At this time the outputs of the OR circuits 810 and 811 are 1 and 0 respectively. To make the OR circuit 811 indicate 0, B and RP must be 0. Accordingly, the outputs of the AND circuits 803 and 808 are 0, and, the output of the AND circuit 805 is 0. Therefore, the flip flop 802 gets into the set state. That is, the flip flops 801 and 802 also get into the set state. At this time (A, B, EP, RP) equal (0, 0, 0, 1). In Figure 21A, an exception detection signal is applied to the state controller 80 as indicated by ④ and a synchronous interrupt request is outputted as indicated by ⑤.

⑥When a new access instruction for accessing a shared storage or a serialize instruction is executed in state RP, a new access must stand by and the circuit must be put in state B to execute a pending retrial. That is, if a new access signal becomes 1 with RP set to 1, the output of the AND circuit 806 turns to 1. A, B, and RP are 0, 0, 1 respectively. Therefore, the AND circuit 803 indicates 0, thereby putting the flip flop 801 in the reset state. Since the AND circuits 803, 805, and 808 are all 0, the flip flop 802 is not reset, but remains in the set state. That is, since the flip flop 801 has the reset state and the flip flop 802 has the set state, (A, B, EP, RP) equal (0,1,0,0).

⑦When a cancel instruction for canceling a pending retrial is received, the retrial is canceled and the system is restored in state A. That is, when a cancel accept signal (CAN ACPT) becomes 1, the output of the AND circuit 805 becomes 1, and the outputs of the OR circuits 809 and 811 becomes 1, thereby putting the flip flops 801 and 802 in the reset state, and (A, B, EP, RP) equal (1, 0, 0, 0).

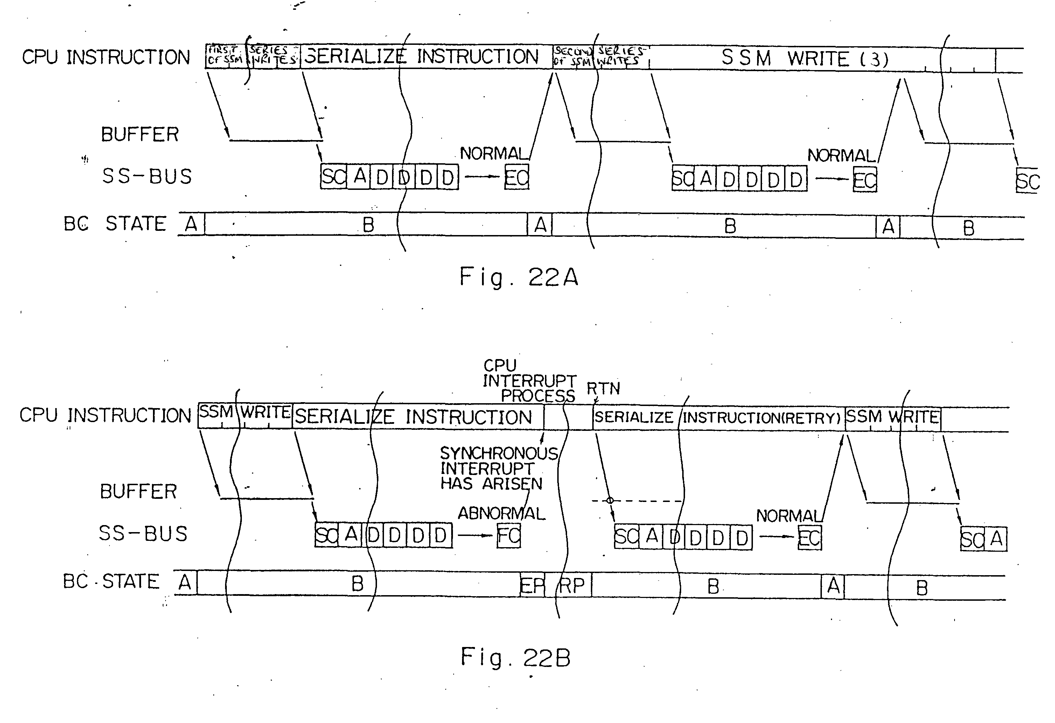

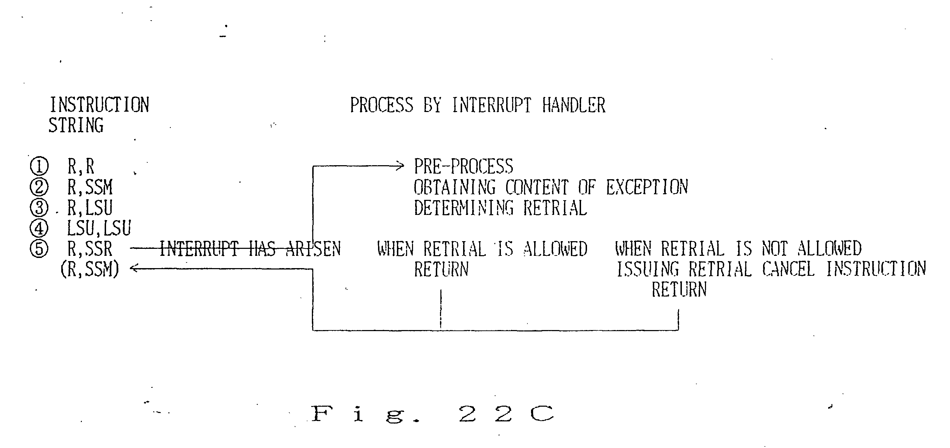

Figures 22A and 22B are timing charts for explaining the write control in an embodiment of the present invention. In Figure 22A, a write request is rejected in the present embodiment when an SSM write instruction is issued by the CPU. Accordingly, a command (SC), an address (A), and data to be stored (D) are outputted to the SS-BUS through a buffer asynchronously with the CPU instruction. At this time the state transition circuit for controlling the write state changes from state A to state B. The CPU issues a write instruction followed by a serialize instruction. When a write operation is successfully performed, an end command (EC) indicating the normal operation is returned to the CPU, and the state transition circuit changes from state B to state A. If data are written to an SSM again, the same operation is performed. The CPU can execute the write instruction followed by other instructions.

However, as shown in Figure 22B, when an exception is detected in an access to a shared storage, state B is changed to state EP, a synchronous interrupt indicating an abnormal operation is issued to the CPU, and the state transition circuit changes from state EP to state RP. In state RP, the CPU executes from the interrupt routine. The state transition circuit executes in this state (retries) a serialize instruction to make another access to the shared storage. Then, the same command (SC), address (A), and data (D) as those of the previous access already stored in the SS-BUS buffer are transmitted to the side of the shared storage. At this time, the new access stands by, and the state transition circuit changes from state RP to state B to execute the suspended retrial. If the retrial is successfully executed, an end code EC indicating a normal termination is returned, and the state transition circuit is set in state A. The next write process is performed using the same procedure.

Figure 22C shows the process performed by the interrupt handler. An instruction string ①R, R indicates a writing operation from a register to another register; ②R, SSM indicates a data transmission from the register to an SSM; ③R, LSU indicates a data transmission from register to an LSU; ④LSU, LSU indicates a data transmission from an LSU to another LSU; and ⑤ R, SSR indicates a serialize instruction.

First, a write to the SSM is accepted by the instruction of ②above.

If an exception arises during a write to an SSM, the operation state changes to state EP. If a writing operation fails when a serialize instruction (or new access instruction for accessing an SSM) of ⑤above is being issued, and if an exception detection signal is applied to the state controller 80, a synchronous interrupt is generated to the CPU with state EP changed to state RP. Then, the interrupt handler determines the possibility of a retrial. If a retrial can be accepted, control can be returned to an original program to perform the retrial. If the retrial cannot be accepted, a retrial cancel instruction is issued, the operation state is returned to state A, and control is returned to the original program. If the operation state indicates state RP after re-executing the in-

struction shown in ⑤above, suspended instructions are retried and the instruction shown in ⑤above is executed. If the operation state indicates state A, the instruction shown in ⑤above must be executed immediately.

As described above, in an embodiment of the present invention, data are transmitted in a block access method in which a plurality of words are grouped in one block if serial access addresses are involved. Thus, a system bus can access data at a high speed and an overhead can be reduced. As a result, the system bus load can be reduced, and the system performance can be improved through the highly efficient system bus. When the operation is performed at a high speed using the block data transmission in which a write may be rejected, a write instruction is followed by a serialize instruction, the write operation is checked as to whether or not it is performed successfully, a synchronous interrupt is generated for the CPU if an abnormal write arises, and then the write is retried. Thus, a recovery process can be performed in the event of an abnormal write in the block transmission, thereby enhancing the system reliability.

## Claims

1. Storage access circuitry, for connection between a central processing unit (18) and a rewritable storage (12) to control access by the central processing unit to the storage, the circuitry (22) comprising:

   write control means (80) operable in response to execution by the central processing unit of a write instruction, included in a sequence of instructions being executed by the central processing unit and calling for data to be written into the said storage, to store the data to be written in a buffer (381), and also operable to cause the data stored in the buffer in the said write instruction to be written into the said storage during the course of execution by the central processing unit of a subsequent instruction in the said instruction sequence;

   characterised by:

   serialise instruction processing means operable in response to execution by the central processing unit of a predetermined serialise instruction, included in the said instruction sequence at the end of such a write instruction and calling for data stored in the said buffer (381) in the preceding write instruction to be written into the said storage, to cause the writing of that stored data to be carried out during the course of execution by the central processing unit of the said serialise instruction; and exception interrupt generating means (80) operable, in the event that an exception occurs during the writing into the said storage of the data stored in the buffer (381) in response to such a serialise instruction, to apply an interrupt to the central processing unit, such that the interrupt is received by the central processing unit before execution of the serialise instruction is completed.

2. Circuitry as claimed in claim 1, wherein the said write control means (80) are switchable between:

a state A indicating that a new access to the said storage can be accepted;
a state B indicating that an existing access to the said storage has started but not yet been completed;
a state EP indicating that an access to the said storage has terminated abnormally and an exception is pending; and
a state RP indicating that a retrial is pending of an access to the said storage that has just failed;
and wherein the write control means are switched from the state B to the state EP when such an exception is detected in an access to the said storage and, when a new access to the said storage or a serialise instruction is executed by the central processing unit in the state EP, such an interrupt is applied synchronously to the central processing unit and the write control means are changed to the state RP.

3. Circuitry as claimed in claim 2, wherein the said write control means are placed in the state A by the initialisation of the said central processing unit, and are changed from the state A to the state B by the reception of a write instruction, and are changed from the state B to the state A when a write to the said storage is completed normally;
and wherein, when the write control means are in the state RP and a new access to the said storage or such a serialise instruction is executed, the new access stands by and the write control means are changed to the state B; and when a cancel instruction, for cancelling a pending retrial, is received the pending retrial is cancelled and the write control means are changed to the state A.

4. Circuitry as claimed in any preceding claim, further comprising a control register for storing a flag readable, in the event that such an interrupt is generated during the course of execution by the central processing unit of a read instruction, to determine whether the exception that caused the interrupt arose from that read instruction or from a write instruction issued before the read instruction.

5. Multiprocessor apparatus including:

a plurality of central processing units (18); and

a rewritable storage (12) shared by the central processing units of the said plurality;
wherein each of the said central processing units of the said plurality has storage access circuitry (22) as claimed in any preceding claim connecting it to the said rewritable storage.

6. Apparatus as claimed in claim 5, wherein the said rewritable storage (12) comprises a plurality of individual shared storage modules.

7. Apparatus as claimed in claim 5 or 6, comprising a plurality of processor modules (10), each including one of the said central processing units (18) and its said storage access circuitry (22).

8. Apparatus as claimed in claim 7, wherein an access instruction, for executing an access to a specified address in a processor-module memory space of the processor module concerned, is recognised as the said serialise instruction.

9. Apparatus as claimed in claim 7 or 8, when claim 7 is read as appended to claim 6, wherein the shared storage modules (12) and the said processor modules (10) are connected together by a system bus (16).

10. Apparatus as claimed in claim 9, wherein:

each said processing module (10) has at least a local storage (20), the said central processing unit (18) of the module concerned, and a connection unit (22), including the said storage access circuitry of the module concerned, connected to said system bus (16), and
each said shared storage module (12) has at least a shared storage unit (26) and a connection unit (28) connected to said system bus (16), wherein:
a block access is requested to said shared storage modules (12) through said system bus (16) when said connection unit (22) of such a processing module (10) recognizes serial access addresses of write or read instructions from the module's said central processing unit (18) to said shared storage modules (12).

11. Apparatus as claimed in claim 10, wherein
one-block data containing a predetermined number of words led by an access address are read from said shared storage unit (26) and transmitted to said processing module (10) when said connection unit (28) of said shared storage module (12) receives a block read request from said processing module (10).

12. Apparatus as claimed in claim 10 or 11, wherein

said connection unit (22) of said processing module (10) receives one-block data containing a predetermined number of words for a block read from said shared storage module (12), stores them in an internal read buffer, and sends read data which are stored in that buffer and which correspond to the next read instruction issued from said central processing unit (18).

13. Apparatus as claimed in any one of claims 10 to 12, wherein

said connection unit (22) of said processing module (10) stores in an internal write buffer data to be written from said central processing unit (18) when it receives from said central processing unit (18) write instructions having serial access addresses, and issues a block write request to said shared storage module (12) when that buffer becomes full, that is, when one-block data comprising a predetermined number of words are stored in the buffer.

14. Apparatus as claimed in any one of claims 10 to 13, wherein

said connection unit (22) of said processing module (10) generates a start transfer command (EC) consisting of a destination ID code (DID) indicating a shared storage module (12) to be accessed, a source ID code (SID) indicating the sender, an operand indicating the type of access, and an access data capacity (BCT), and transmits to said system bus (16) said start transfer command (EC) together with an access address (A) of a shared storage module (12) at said destination.

15. Apparatus as claimed in claim 14, wherein

said connection unit (22) of said processing module (10) transmits said start transfer command (SC) and said access address (A) during a read access, and transmits said start transfer command (SC), said access address (A), and data to be written (D) during a write access.

16. Apparatus as claimed in claim 15, wherein

said connection unit (28) of said shared storage module (12) monitors said system bus (16) and receives said start transfer command (SC) when it determines that said destination ID code of said start transfer command (SC) and its own unit ID match.

17. Apparatus as claimed in claim 16, wherein

said connection unit (28) of said shared storage module (12) generates a response transfer command (EC) consisting of said ID code (DID) indicating a destination processing module (10), said source ID code (SID) indicating the sender, and an end code and transmits it to said system bus (16) when an access to said shared storage unit (26) is terminated according to said start transfer command (SC) received in the receiving operation.

18. Apparatus as claimed in claim 17, wherein

said connection unit (22) of said processing module (10) monitors said system bus (16) and receives said response transfer command (EC) when it determines that said destination ID code (DID) of said response transfer command (EC) and its own unit ID match.

**Patentansprüche**

1. Speicherzugriffsschaltungsaufbau, zum Verbinden zwischen einer Zentraleinheit (18) und einem überschreibbaren Speicher (12), um einen Zugriff durch die Zentraleinheit auf den Speicher zu steuern, welcher Schaltungsaufbau (22) umfaßt:

eine Schreibsteuereinrichtung (80), die betreibbar ist ansprechend auf die Ausführung, durch die Zentraleinheit, einer Schreibinstruktion, welche in einer Sequenz von Instruktionen enthalten ist, die von der Zentraleinheit ausgeführt werden, und welche aufruft, daß Daten in den Speicher geschrieben werden, um die zu schreibenden Daten in einem Puffer (381) zu speichern, und die auch betreibbar ist, um zu veranlassen, daß die im Puffer gespeicherten Daten in der Schreibinstruktion im Laufe der Ausführung einer nachfolgenden Instruktion in der Instruktionssequenz durch die Zentraleinheit in den Speicher geschrieben werden;

gekennzeichnet durch:

eine Serialisierungsinstruktions-Verarbeitungseinrichtung, die betreibbar ist ansprechend auf die Ausführung, durch die Zentraleinheit, einer vorherbestimmten Serialisierungsinstruktion, welche in der Instruktionssequenz am Ende einer derartigen Schreibinstruktion enthalten ist, und welche aufruft, daß Daten, die im Puffer (381) in der vorhergehenden Schreibinstruktion gespeichert wurden, in den Speicher geschrieben werden, um zu veranlassen, daß das Schreiben dieser gespeicherten Daten im Laufe der Ausführung der Serialisierungsinstruktion durch die Zentraleinheit durchgeführt wird; und

einer Ausnahmeunterbrechungs-Generierungseinrichtung (80), die betreibbar ist, in dem Fall, daß eine Ausnahme während des Schreibens, in den Speicher, der im Puffer (381) gespeicherten Daten ansprechend auf eine derartige Serialisierungsinstruktion auftritt, um eine Unterbrechung an die Zentraleinheit so anzulegen, daß die Unterbrechung von der Zentraleinheit empfangen wird, bevor die Ausführung der Serialisierungsinstruktion vollendet ist.

2. Schaltungsaufbau nach Anspruch 1, bei welchem die Schreibsteuereinrichtung (80) schaltbar ist zwischen:

einem Zustand A, der anzeigt, daß ein neuer Zugriff auf den Speicher akzeptiert werden kann;
einem Zustand B, der anzeigt, daß ein bestehender Zugriff auf den Speicher begonnen hat, aber noch nicht vollendet wurde;
einem Zustand EP, der anzeigt, daß ein Zugriff auf den Speicher abnormal beendet worden ist und eine Ausnahme ansteht; und
einem Zustand RP, der anzeigt, daß eine Wiederholung eines Zugriffs auf den Speicher, der gerade fehlgeschlagen ist, ansteht;
und bei welchem die Schreibsteuereinrichtung vom Zustand B zum Zustand EP geschaltet wird, wenn eine derartige Ausnahme in einem Zugriff auf den Speicher detektiert wird, und wenn ein neuer Zugriff auf den Speicher oder eine Serialisierungsinstruktion durch die Zentraleinheit im Zustand EP ausgeführt wird, eine derartige Unterbrechung synchron an die Zentraleinheit angelegt wird, und die Schreibsteuereinrichtung in den Zustand RP gewechselt wird.

3. Schaltungsaufbau nach Anspruch 2, bei welchem die Schreibsteuereinrichtung durch die Initialisierung der Zentraleinheit in den Zustand A versetzt wird, und durch den Empfang einer Schreibinstruktion vom Zustand A in den Zustand B gewechselt wird, und vom Zustand B in den Zustand A gewechselt wird, wenn ein Schreiben in den Speicher normal vollendet wird;
und bei welchem, wenn die Schreibsteuereinrichtung im Zustand RP ist, und ein neuer Zugriff auf den Speicher oder eine derartige Serialisierungsinstruktion ausgeführt wird, der neue Zugriff wartet, und die Schreibsteuereinrichtung in den Zustand B gewechselt wird; und wenn eine Abbruchoperation zum Abbrechen einer anstehenden Wiederholung empfangen wird, die anstehende Wiederholung abgebrochen wird, und die Schreibsteuereinrichtung in den Zustand A gewechselt wird.

4. Schaltungsaufbau nach einem der vorhergehenden Ansprüche, ferner mit einem Steuerregister zum Speichern einer Flagge, die lesbar ist, in dem Fall, daß eine derartige Unterbrechung im Laufe der Ausführung einer Schreibinstruktion durch die Zentraleinheit generiert wird, um zu bestimmen, ob die Ausnahme, welche die Unterbrechung veranlaßt hat, aus dieser Leseinstruktion oder aus einer vor der Leseinstruktion erteilten Schreibinstruktion entstanden ist.

5. Mehrprozessorvorrichtung, welche enthält:

eine Vielzahl von Zentraleinheiten (18); und
einen überschreibbaren Speicher (12), der von den Zentraleinheiten der Vielzahl gemeinsam genutzt wird;
wobei jede der Zentraleinheiten der Vielzahl einen Speicherzugriffsschaltungsaufbau (22) nach einem der vorhergehenden Ansprüche aufweist, der sie mit dem überschreibbaren Speicher verbindet.

6. Vorrichtung nach Anspruch 5, bei welcher der überschreibbare Speicher (12) eine Vielzahl individueller gemeinsam genutzter Speichermodule umfaßt.

7. Vorrichtung nach Anspruch 5 oder 6, mit einer Vielzahl von Prozessormodulen (10), die jeweils eine der Zentraleinheiten (18) und ihren Speicherzugriffsschaltungsaufbau (22) enthalten.

8. Vorrichtung nach Anspruch 7, bei welcher eine Zugriffsinstruktion, zum Ausführen eines Zugriffs auf eine spezifizierte Adresse in einem Prozessormodul-Memoryspeicherraum des betreffenden Prozessormoduls, als Serialisierungsinstruktion erkannt wird.

9. Vorrichtung nach Anspruch 7 oder 8, wenn Anspruch 7 auf Anspruch 6 rückbezogen ist, bei welcher die gemeinsam genutzten Speichermodule (12) und die Prozessormodule (10) durch einen Systembus (16) miteinander verbunden sind.

10. Vorrichtung nach Anspruch 9, bei welcher:

bei jedem Verarbeitungsmodul (10) zumindest ein lokaler Speicher (20), die Zentraleinheit (18) des betreffenden Moduls und eine Verbindungseinheit (22), die den Speicherzugriffsschaltungsaufbau des betreffenden Moduls enthält, mit dem Systembus (16) verbunden sind, und
bei jedem gemeinsam genutzten Speichermodul (12) zumindest eine gemeinsam genutzte Speichereinheit (26) und eine Verbindungseinheit (28) mit dem Systembus (16) verbunden sind, wobei:
ein Blockzugriff auf die gemeinsam genutzten Speichermodule (12) durch den Systembus (16) angefordert wird, wenn die Verbindungseinheit (22) eines derartigen Verarbeitungsmoduls (10) serielle Zugriffsadressen von Schreib- oder Leseinstruktionen von der Zentraleinheit (18) des Moduls an die gemeinsam genutzten Speichermodule (12) erkennt.

**11.** Vorrichtung nach Anspruch 10, bei welcher
Ein-Block-Daten, die eine vorherbestimmte Anzahl von Wörtern enthalten, welche von einer Zugriffsadresse angeführt werden, aus der gemeinsam genutzten Speichereinheit (26) gelesen und zum Verarbeitungsmodul (10) gesendet werden, wenn die Verbindungseinheit (28) des gemeinsam genutzten Speichermoduls (12) eine Blockleseanforderung vom Verarbeitungsmodul (10) empfängt.

**12.** Vorrichtung nach Anspruch 10 oder 11, bei welcher
die Verbindungseinheit (22) des Verarbeitungsmoduls (10) Ein-Block-Daten, welche eine vorherbestimmte Anzahl von Wörtern enthalten, für einen aus dem gemeinsam genutzten Speichermodul (12) gelesenen Block empfängt, diese in einem internen Lesepuffer speichert, und gelesene Daten sendet, welche in diesem Puffer gespeichert sind, und welche der nächsten Leseeinstruktion entsprechen, die von der Zentraleinheit (18) erteilt wird.

**13.** Vorrichtung nach einem der Ansprüche 10 bis 12, bei welcher
die Verbindungseinheit (22) des Verarbeitungsmoduls (10) in einem internen Schreibpuffer zu schreibende Daten von der Zentraleinheit (18) speichert, wenn sie von der Zentraleinheit (18) Schreibinstruktionen mit seriellen Zugriffsadressen empfängt, und dem gemeinsam genutzten Speichermodul (12) eine Blockschreibanforderung erteilt, wenn dieser Puffer voll wird, das heißt, wenn Ein-Block-Daten mit einer vorherbestimmten Anzahl von Wörtern im Puffer gespeichert sind.

**14.** Vorrichtung nach einem der Ansprüche 10 bis 13, bei welcher
die Verbindungseinheit (22) des Verarbeitungsmoduls (10) einen Starttransferbefehl (SC) generiert, welcher aus einem Ziel-ID-Code (DID), der ein gemeinsam genutztes Speichermodul (12) anzeigt, auf das zuzugreifen ist, einem Quell-ID-Code (SID), der den Absender anzeigt, einem Operanden, der den Zugriffstyp anzeigt, und einer Zugriffsdatenkapazität (BCT) besteht, und den Starttransferbefehl (SC) zusammen mit einer Zugriffsadresse (A) eines gemeinsam genutzten Speichermoduls (12) am Ziel zum Systembus (16) sendet.

**15.** Vorrichtung nach Anspruch 14, bei welcher
die Verbindungseinheit (22) des Verarbeitungsmoduls (10) den Starttransferbefehl (SC) und die Zugriffsadresse (A) während eines Lesezugriffs sendet, und den Starttransferbefehl (SC), die Zugriffsadresse (A) und zu schreibende Daten (D) während eines Schreibzugriffs sendet.

**16.** Vorrichtung nach Anspruch 15, bei welcher
die Verbindungseinheit (28) des gemeinsam genutzten Speichermoduls (12) den Systembus (16) überwacht und den Starttransferbefehl (SC) empfängt, wenn sie bestimmt, daß der Ziel-ID-Code des Starttransferbefehls (SC) und ihre eigene Einheiten-ID übereinstimmen.

**17.** Vorrichtung nach Anspruch 16, bei welcher
die Verbindungseinheit (28) des gemeinsam genutzten Speichermoduls (12) einen Antworttransferbefehl (EC) generiert, welcher aus dem ID-Code (DID), der ein Zielverarbeitungsmodul (10) anzeigt, dem Quell-ID-Code (SID), der den Absender anzeigt, und einem Endcode besteht, und ihn zum Systembus (16) sendet, wenn ein Zugriff auf die gemeinsam genutzte Speichereinheit (26) gemäß dem in der Empfangsoperation empfangenen Starttransferbefehl (SC) beendet ist.

**18.** Vorrichtung nach Anspruch 17, bei welcher
die Verbindungseinheit (22) des Verarbeitungsmoduls (10) den Systembus (16) überwacht und den Antworttransferbefehl (EC) empfängt, wenn sie bestimmt, daß der Ziel-ID-Code (DID) des Antworttransferbefehls (EC) und ihre eigene Einheiten-ID übereinstimmen.

**Revendications**

**1.** Circuit d'accès en mémoire, assurant la connexion entre une unité centrale de traitement (18) et une mémoire réinscritible (12) afin de commander l'accès, par unité centrale de traitement, à la mémoire, le circuit (22) comprenant :
un moyen de commande d'écriture (80) ayant pour fonction, en réponse à l'exécution, par l'unité centrale de traitement, d'une instruction d'écriture, incluse dans une séquence d'instructions en train d'être exécutées par l'unité centrale de traitement et demandant que des données soient écrites dans ladite mémoire, de stocker dans un tampon (381) les données devant être écrites, et ayant également pour fonction de faire en sorte que les données stockées dans le tampon lors de ladite instruction d'écriture soient écrites dans ladite mémoire pendant le cours de l'exécution, par l'unité centrale de traitement, d'une instruction suivante de ladite séquence d'instructions ;
caractérisé par :

un moyen de traitement d'instruction de sérialisation ayant pour fonction, en réponse à l'exécution, par l'unité centrale de traitement, d'une instruction de sérialisation prédéterminée, incluse dans ladite séquence d'instructions à la fin de cette instruction d'écriture et demandant que des données stockées dans ledit tampon (381) lors de l'instruction d'écriture précédente soient écrites dans ladite mémoire, de faire en sorte que l'écriture de ces données stockées soit effectuée pendant le cours de l'exécution, par l'unité centrale de traitement, de ladite instruction de sérialisation ; et

un moyen (80) générateur d'interruption d'exception ayant pour fonction, dans le cas où une exception se produit pendant l'écriture, dans ladite mémoire, des données stockées dans le tampon (381) en réponse à cette instruction de sérialisation, d'appliquer une interruption à l'unité centrale de traitement, de sorte que l'interruption soit reçue par l'unité centrale de traitement avant que l'exécution de l'instruction de sérialisation soit achevée.

2. Circuit selon la revendication 1, où ledit moyen (80) de commande d'écriture peut commuter entre :

un état A indiquant qu'un nouvel accès à ladite mémoire peut être accepté ;
un état B indiquant qu'un accès courant à ladite mémoire a commencé, mais n'est pas encore achevé ;
un état EP indiquant qu'un accès à ladite mémoire s'est terminé de façon anormale et qu'une exception est en cours ;
un état RP indiquant qu'un nouvel essai est en cours en ce qui concerne un accès à ladite mémoire qui vient juste d'échouer ;
et où le moyen de commande d'écriture commute de l'état B à l'état EP lorsqu'une semblable exception est détectée lors d'un accès à ladite mémoire et, lorsqu'un nouvel accès à ladite mémoire ou une instruction de sérialisation est exécuté par l'unité centrale de traitement dans l'état EP, cette interruption est appliquée de façon synchrone à l'unité centrale de traitement et le moyen de commande d'écriture passe à l'état RP.

3. Circuit selon la revendication 2, où ledit moyen de commande d'écriture est placé dans l'état A par l'initialisation de ladite unité centrale de traitement et passe de l'état A à l'état B suite à la réception d'une instruction d'écriture, tandis qu'il passe de l'état B à l'état A lorsque l'écriture dans ladite mémoire s'est achevée normalement ;

et où, lorsque le moyen de commande d'écriture est dans l'état RP et qu'un nouvel accès à ladite mémoire ou une semblable instruction de sérialisation est exécuté, le nouvel accès attend et le moyen de commande d'écriture passe dans l'état B ; et, lorsqu'une instruction d'annulation, visant à annuler un nouvel essai en cours, est reçue, le nouvel essai en cours est annulé et le moyen de commande d'écriture passe dans l'état A.

4. Circuit selon l'une quelconque des revendications précédentes, comprenant en outre un registre de commande servant à stocker un drapeau qui peut être lu, dans le cas où une semblable interruption est produite pendant le cours de l'exécution, par l'unité centrale de traitement, d'une instruction de lecture, afin de déterminer si l'exception qui a provoqué l'interruption venait de cette instruction de lecture ou d'une instruction d'écriture délivrée avant l'instruction de lecture.

5. Appareil multiprocesseur comportant

une pluralité d'unités centrales de traitement (18) ; et
une mémoire réinscriptible (12) partagée par les unités centrales de traitement de ladite pluralité ;
où chacune desdites unités centrales de traitement de ladite pluralité possède un circuit (22) d'accès en mémoire tel que défini dans l'une quelconque des revendications précédentes, qui la relie à ladite mémoire réinscriptible.

6. Appareil selon la revendication 5, où ladite mémoire réinscriptible (12) comprend une pluralité de modules de mémoire partagés distincts.

7. Appareil selon la revendication 5 ou 6, comprenant une pluralité de modules de traitement (10), comportant chacun l'une desdites unités centrales de traitement (18) et son dit circuit (22) d'accès en mémoire.

8. Appareil selon la revendication 7, où une instruction d'accès, servant à exécuter un accès à une adresse spécifiée d'un espace de mémorisation de module de traitement du module de traitement considéré, est reconnue comme étant ladite instruction de sérialisation.

9. Appareil selon la revendication 7 ou 8, dans le cas où la revendication 7 est lue en liaison avec la revendication 6, où les modules de mémoire partagés (12) et lesdits modules de traitement (10) sont connectés ensemble par un bus système (16).

10. Appareil selon la revendication 9, où :

chaque dit module de traitement (10) possède au moins une mémoire locale (20), ladite unité centrale de traitement (18) du module considéré, et une unité de connexion (22), comportant ledit circuit d'accès en mémoire du module considéré, connectés audit bus système (16), et chaque dit module de mémoire partagé (12) possède au moins une unité de mémoire partagée (26) et une unité de connexion (28) connectées audit bus système (16), où :

un accès de bloc est demandé auxdits modules de mémoire partagés (12) via ledit bus système (16) lorsque ladite unité de connexion (22) de ce module de traitement (10) reconnaît des adresses d'accès série d'instructions d'écriture ou de lecture venant de l'unité centrale de traitement (18) du module pour aller auxdits modules de mémoire partagés (12).

11. Appareil selon la revendication 10, où des données d'un bloc contenant un nombre prédéterminé de mots conduites par une adresse d'accès sont lues dans ladite unité de mémoire partagée (26) et transmises audit module de traitement (10) lorsque ladite unité de connexion (28) dudit module de mémoire partagé (12) reçoit une demande de lecture de bloc de la part dudit module de traitement (10).

12. Appareil selon la revendication 10 ou 11, où :

ladite unité de connexion (22) dudit module de traitement (10) reçoit des données d'un bloc contenant un nombre prédéterminé de mots pour un bloc lues dans ledit module de mémoire partagé (12), les stocke dans un tampon de lecture interne, et émet les données qui ne sont pas stockées dans ce tampon et qui correspondent à l'instruction de lecture suivante délivrée en provenance de ladite unité centrale de traitement (18).

13. Appareil selon l'une quelconque des revendications 10 à 12, où :

ladite unité de connexion (22) dudit module de traitement (10) stocke dans un tampon d'écriture interne des données devant être écrites en provenance de ladite unité centrale de traitement (18) lorsqu'elle reçoit, de la part de ladite unité centrale de traitement (18), des instructions d'écriture ayant des adresses d'accès série et délivre une demande d'écriture de bloc audit module de mémoire partagé (12) lorsque ce tampon est devenu plein, c'est-à-dire lorsque des données d'un bloc comprenant un nombre prédéterminé de mots sont stockées dans le tampon.

14. Appareil selon l'une quelconque des revendications 10 à 13, où :

ladite unité de connexion (22) dudit module de traitement (10) produit une instruction de transfert de début (EC) consistant en un code d'identification de destination (DID) indiquant un module de mémoire partagé (12) auquel il faut faire accès, un code d'identification de source (SID) indiquant l'émetteur, un opérande indiquant le type d'accès, et une capacité de données d'accès (BCT), et transmet audit bus système (16) ladite instruction de transfert de début (EC) en même temps qu'une adresse d'accès (A) d'un module de mémoire partagé (12) se trouvant à ladite destination.

15. Appareil selon la revendication 14, où :

ladite unité de connexion (22) dudit module de traitement (10) transmet ladite instruction de transfert de début (SC) et ladite adresse d'accès (A) pendant un accès en lecture, et transmet ladite instruction de transfert de début (SC), ladite adresse d'accès (A), et des données devant être écrites (D) pendant un accès en écriture.

16. Appareil selon la revendication 15, où :

ladite unité de connexion (28) dudit module de mémoire partagé (12) surveille ledit bus système (16) et reçoit ladite instruction de transfert de début (SC) lorsqu'elle détermine que ledit code d'identification de destination de ladite instruction de transfert de début (SC) et sa propre identification d'unité concordent.

17. Appareil selon la revendication 16, où :

ladite unité de connexion (28) dudit module de mémoire partagé (12) produit une instruction de transfert de réponse (EC) constituée dudit code d'identification (DID) indiquant un module de traitement (10) de destination, dudit code d'identification de source (SID) indiquant l'émetteur, et d'un code de fin, et elle la transmet audit bus système (16) lorsqu'un accès à l'unité de mémoire partagée (26) se termine selon ladite instruction de transfert de début (SC) reçue dans l'opération de réception.

18. Appareil selon la revendication 17, où :

ladite unité de connexion (22) dudit module de traitement (10) surveille ledit bus système (16) et reçoit ladite instruction de transfert de réponse (EC) lorsqu'elle détermine que ledit code d'identification de destination (DID) de ladite instruction de transfert de réponse (EC) et sa propre identification d'unité concordent.

12 SHARED STORAGE MODULE   12 SHARED STORAGE MODULE

SHARED STORAGE UNIT —26

CONNECTION UNIT —28

16 SHARED SYSTEM BUS

SHARED STORAGE UNIT —26

CONNECTION UNIT —28

CONNECTION UNIT —22

LOCAL STORAGE —20

CENTRAL PROCESSING UNIT —18

10 PROCESSING MODULE

CONNECTION UNIT —22

LOCAL STORAGE —20

CENTRAL PROCESSING UNIT —18

10 PROCESSING MODULE

Fig. 1A

EP 0 500 967 B1

PROCESSING MODULE 10       SYSTEM BUS 16    SHARED MEMORY MODULE 12

CENTRAL PROCESSING UNIT 18     CONNECTION UNIT 22

PHYSICAL ADDRESS

READ ACCESS

n     REQUEST    READ INSTRUCTION (a-R) ISSUED BY μP TO SSM BY PHYSICAL ADDRESS    n+1 n+2 n+3    BLOCK READ REQUEST (Blk_R)

n    DATA   (a-D)

n+1   REQUEST   (b-R)

n+1   DATA   (b-D)    BLOCK RESPONSE (Blk_D)

n+2   REQUEST   (c-R)

n+2   DATA   (c-D)

n+3   REQUEST   (d-R)

n+3   DATA   (d-D)

WRITE ACCESS

n
n+1   a-W    WHEN BUFFER BECOMES FULL
n+2   b-W
n+3   c-W    BLOCK WRITE REQUEST

n+3   DATA   (d-W)    d-W

Fig. 1B

EP 0 500 967 B1

EP 0 500 967 B1

```
                    ┌─12          ┌─12          ┌─12
         ┌──────────────┐ ┌──────────────┐ ┌──────────────┐
         │SHARED STORAGE│ │SHARED STORAGE│ │SHARED STORAGE│
         │MODULE        │ │MODULE        │ │MODULE        │
         │  SSM#0       │ │  SSM#1       │ │  SSM#2       │
         │UID=0000000   │ │UID=0000001   │ │UID=0000010   │
         │──────────────│ │──────────────│ │──────────────│
         │SSBC-S│SSBC-S │ │SSBC-S│SSBC-S │ │SSBC-S│SSBC-S │
         └──────────────┘ └──────────────┘ └──────────────┘
```

SHARED STORAGE MODULE SSM#0 UID=0000000
SHARED STORAGE MODULE SSM#1 UID=0000001
SHARED STORAGE MODULE SSM#2 UID=0000010

SSBC-S  SSBC-S

14

┌────────────┐
│   S S B H  │
└────────────┘

16 SHARED SYSTEM BUS
(SS-BUS) (#0)

16 SHARED SYSTEM BUS
(SS-BUS) (#1)

┌────────────┐
│   S S B H  │
└────────────┘

14 SHARED SYSTEM BUS HANDLER

10

SSBC-P  SSBC-P
PROCESSOR MODULE PM#0 UID=1000000

SSBC-P  SSBC-P
PROCESSOR MODULE PM#1 UID=1000001

SSBC-P  SSBC-P
PROCESSOR MODULE PM#2 UID=1000010

F i g .  2

10 PROCESSOR
MODULE

CONNECTION UNIT
(S S B C − P)

CONNECTION UNIT
(S S B C − P)

22

22

24 INTERNAL
BUS

(L S U)
LOCAL
STORAGE UNIT

18

20

CENTRAL PROCESSING UNIT
($\mu$ P)

F i g.  3

SHARED STORAGE
MODULE

1 2

CONNECTION UNIT
(S S B C — S)

CONNECTION UNIT
(S S B C — S)

28

28

30 INTERNAL
BUS

26

SHARED STORAGE UNIT
(S    S    U)

F i g .  4

INTERNAL BUS 24

⌇ 22 CONNECTION UNIT

| 40 | 42 | 44 | | 46 | 48 | 50 |
|---|---|---|---|---|---|---|
| ADRS DES | Tmg CTR | CONFIGURA-TION DEFINITION REGISTER | | ADRS GEN | Tmg CTR | DMA CONTROL REGISTER |

PROGRAM MODE— C T R 3 2

DMA MODE — C T R 3 4

# DUAL PORT RAM

38

TRANSMITTER—RECEIVER ⌇ 36
C I R C U I T

SS−BUS 16

F i g. 5

INTERNAL BUS 3 0 ─────────────────────────────────────────

DMA CONTROL CIRCUIT

70  72  74

| ADRS GEN | Tmg CTR | INTERNAL BUS CONTROL CIRCUIT |

52

54

INTERNAL BUS ARBITER

DUAL PORT RAM

56

TRANSMITTER−RECEIVER CIRCUIT  58

SS−BUS 16 ─────────────────────────────────────────

Fig. 6

START TRANSFER COMMAND
(SC)

| D I D | S I D | OPERAND | B C T |
|---|---|---|---|

RESPONSE TRANSFER COMMAND
(EC)

| D I D | S I D | END CODE | |
|---|---|---|---|

D I D · · · DESTINATION U I D
S I D · · · SOURCE U I D
B C T · · · TRANSFER DATA CAPACITY

F i g. 7

PM10 { | SC | A | D | D | D | D |    EC

SSBUS16 {
SENDING ↑ RECEIVING
DID=UID
DID=UID
RECEIVING
SENDING

SSM12 { | SC | A | D | D | D | D |  ─── ACCESS TO SSM ───→  EC

SC ··· START TRANSFER COMMAND
A ··· ACCESS ADDRESS
D ··· TRANSFER DATA

# Fig. 8

EP 0 500 967 B1

PM <u>10</u> { | SC | A |

SSBUS <u>16</u> {

↓ SENDING

DID=UID

↓ RECEIVING

SSM <u>12</u> { | SC | A |  ────────── ACCESS TO SSM ──────────→

| EC | D | D | D | D |

↑ RECEIVING
DID=UID

| SENDING

| EC | D | D | D | D |

EC ··· RESPONSE TRANSFER COMMAND
A ··· ACCESS ADDRESS
D ··· TRANSFER DATA

# F i g. 9

# PM SPECIFIC SPACE

| L S U SPACE |
|---|
| CONTROL SPACE |

| L S U SPACE |
|---|
| CONTROL SPACE |

| L S U SPACE |
|---|
| CONTROL SPACE |

| L S U SPACE |
|---|
| CONTROL SPACE |

# PM PHYSICAL ADDRESS SPACE

00000000
| S S U SPACE |
7FFFFFFF
| PM SPECIFIC SPACE |
FFFFFFFF

00000000
| S S U SPACE |
7FFFFFFF
| PM SPECIFIC SPACE |
FFFFFFFF

00000000
| S S U SPACE |
7FFFFFFF
| PM SPECIFIC SPACE |
FFFFFFFF

00000000
| S S U SPACE |
7FFFFFFF
| PM SPECIFIC SPACE |
FFFFFFFF

# S S U SPACE

| | |
|---|---|
| A PART OF SSU PLACE #0 | 00000000 |
| A PART OF SSU PLACE #1 | 10000000 |
| A PART OF SSU PLACE #2 | 20000000 |
| A PART OF SSU PLACE #3 | 30000000 |
| A PART OF SSU PLACE #4 | 40000000 |
| A PART OF SSU PLACE #5 | 50000000 |
| A PART OF SSU PLACE #6 | 60000000 |
| A PART OF SSU PLACE #7 | 70000000 |
| | 7FFFFFFF |

F i g. 1 0

SSU SPACE
ACCESSIBLE IN
PHYSICAL ADDRESS

EXTENDED SSU SPACE
ACCESSIBLE IN
DMA MODE

00000000
UID=0000000
UID=0000001
UID=0000010
UID=0000011
UID=0000100
UID=0000101
UID=0000110
UID=0000111
7FFFFFFF

00000000
UID=0000000
UID=0000001
UID=0000010
UID=0000011
UID=0000100
UID=0000101
UID=0000110
UID=0000111
7FFFFFFF

2 GB

00000000
UID=0001000
FFFFFFFF

00000000
UID=0001001
FFFFFFFF

226 GB

4 GB * 5 6 UNITS
= 224 GB

00000000
UID=0111111
FFFFFFFF

Fig. 11

EP 0 500 967 B1

**6 0** FIRST CONTROL REGISTER

| 1 1 1 0 1 0 0 1 | * * * * * * * * | * * * * * * * * | * * * * * * * * |

```
I I I I I I I I
0 1 2 3 4 5 6 7
```
      I0(INSTALL 0) ···· SPECIFYING EXISTENCE/NON-EXISTENCE OF SSM CORRESPONDING PARTIAL SSU SPACE #0
      I1(INSTALL 1) ···· SPECIFYING EXISTENCE/NON-EXISTENCE OF SSM CORRESPONDING PARTIAL SSU SPACE #1
      I2(INSTALL 2) ···· SPECIFYING EXISTENCE/NON-EXISTENCE OF SSM CORRESPONDING PARTIAL SSU SPACE #2
         ⋮
      I7(INSTALL 7) ···· SPECIFYING EXISTENCE/NON-EXISTENCE OF SSM CORRESPONDING PARTIAL SSU SPACE #7

      I0 ～ I7   0 ···· SPECIFYING NON-EXISTENCE OF SSM CORRESPONDING TO EACH PHYSICAL ADDRESS
               1 ···· SPECIFYING EXISTENCE OF SSM CORRESPONDING TO EACH PHYSICAL ADDRESS

# F i g.  1 2

6 2 − 1 SECOND CONTROL REGISTER

| 0 | 0 0 0 0 0 0 0 | 0 | 0 0 0 0 0 0 1 | 1 | 0 0 0 0 0 1 0 | * | * * * * * * * |
|---|---|---|---|---|---|---|---|

| D0 | UID0 | D1 | UID1 | D2 | UID2 | D3 | UID3 |
|---|---|---|---|---|---|---|---|

6 2 − 2

| 1 | 0 0 0 0 1 0 1 | * | * * * * * * * | * | * * * * * * * | 0 | 0 0 0 0 1 1 1 |
|---|---|---|---|---|---|---|---|

| D4 | UID4 | D5 | UID5 | D6 | UID6 | D7 | UID7 |
|---|---|---|---|---|---|---|---|

D0 ····· SPECIFYING CONFIGURATION ACCESS MODE OF SSM CORRESPONDING TO PARTIAL SSU SPACE #0
D1 ····· SPECIFYING CONFIGURATION ACCESS MODE OF SSM CORRESPONDING TO PARTIAL SSU SPACE #1
D2 ····· SPECIFYING CONFIGURATION ACCESS MODE OF SSM CORRESPONDING TO PARTIAL SSU SPACE #2
        ⋮
D7 ····· SPECIFYING CONFIGURATION ACCESS MODE OF SSM CORRESPONDING TO PARTIAL SSU SPACE #7

UID0~7 ···· SPECIFYING UNIT-ID IN SSBUS OF SSM CORRESPONDING TO EACH PARTIAL SSU SPACE.
            DUPLEX CONFIGURATION OF SSU IS FIXED WITH THE LOWEST ORDER UID BIT OF '0' OR '1'.

# F i g. 1 3

X '00000000' ┌─S S U SPACE  #0 ──────
VALID  S S U D F , AND
SPECIFYING SIMPLEX
X '0FFFFFFF' SSCFG FOR UID= '0000000'

S S M

UID= '0000000'

X '10000000' ┌─S S U SPACE  #1 ──────
VALID  S S U D F , AND
SPECIFYING SIMPLEX
X '1FFFFFFF' SSCFG FOR UID= '0000001'

S S M

UID= '0000001'

X '20000000' ┌─S S U SPACE  #2 ──────
VALID  S S U D F , AND
SPECIFYING DUPLEX
X '2FFFFFFF' SSCFG FOR UID= '0000010'

S S M

UID= '0000010'

UID= '0000011'

X '30000000' ┌─S S U SPACE  #3 ──────
INVALID  S S U D F

X '3FFFFFFF'

S S M DOES NOT EXIST

X '40000000' ┌─S S U SPACE  #4 ──────
VALID  S S U D F , AND
SPECIFYING DUPLEX
X '4FFFFFFF' SSCFG FOR UID= '0000101'

S S M

UID= '0000101'

UID= '0000100'

X '50000000' ┌─S S U SPACE  #5 ──────
INVALID  S S U D F

X '5FFFFFFF'

S S M DOES NOT EXIST

X '60000000' ┌─S S U SPACE  #6 ──────
INVALID  S S U D F

X '6FFFFFFF'

S S M DOES NOT EXIST

X '70000000' ┌─S S U SPACE  #7 ──────
VALID  S S U D F , AND
SPECIFYING SIMPLEX
X '7FFFFFFF' SSCFG FOR UID= '0000111'

S S M

UID= '0000111'

F i g.  1 4

36

START

S1 ACCESS OF μP

S2 ADDRESS=SSU SPACE? NO

YES

S3 REFERR-ING TO SSUDF. SPECIFIED ADDRESS SSM IS IMPLEMEN-TED ? NO → ABNORMAL TERMINATION S4

YES

S5 RETURNING RETRIAL SIGNAL TO μP. SETTING μP IN WAIT STATE

S6 FETCH/STORE ? STORE

FETCH

S7 REFERRING TO SSCFG. GENERATING A FETCH COMMAND BY SETTING UID AT SPECIFIED ADDRESS SSM TO DID IN COMMAND

S14 REFERRING TO SSCFG. GENERATING A STORE COMMAND BY SETTING UID AT SPECIFIED ADDRESS SSM TO DID IN COMMAND

S8 OBTAINING SSBUS USE RIGHT. SENDING COMMAND AND ADDRESS.

OBTAINING SSBUS USE RIGHT. SENDING COMMAND, ADDRESS, AND DATA

S22 GENERATING STORE COMMAND BY INVERTING LOWEST ORDER BIT OF UID AND USE IT AS DID.

16 SSBUS S15

S23 OBTAINING SSBUS USE RIGHT. SENDING COMMAND, ADDRESS AND DATA

S9 MONITORING SSBUS.

S16 MONITORING SSBUS.

16 SSBUS

S24 MONITORING SSBUS

S10 DID=UID IN TRANSFER COMMAND? ITS OWN PM SELECTED? NO

S17 DID=UID IN TRANSFER COMMAND? ITS OWN PM SELECTED? NO

S25 DID=UID IN TRANSFER COMMAND? ITS OWN PM SELECTED? NO

YES

YES

YES

S11 RECEIVING RESPONSE TRANS-FER COMMAND AND DATA

S18 RECEIVING RESPONSE TRANS-FER COMMAND

S26 RECEIVING RESPONSE TRANS-FER COMMAND

S12 NEGATING RETRIAL SIGNAL. RELEASING WAIT OF μP.

S19 REFERRING TO SSCFG. DUPLICATING WRITE ? YES

NO

S13 RETURNING DATA TO μP TOGETHER WITH END OF BUS SIGNAL.

S20 NEGATING RETRIAL SIGNAL. RELEASING WAIT OF μP.

S27 NEGATING RETRIAL SIGNAL. RELEASING WAIT OF μP.

S21 RETURNING END OF BUS SIGNAL TO μP

S28 RETURNING END OF BUS SIGNAL TO μP

END

END

END

DUPLICATING WRITE PROCESS

Fig. 15A

37

```
                    ┌─────────────────────┐
                    │   S S B U S         │──16
                    └─────────────────────┘
                              │
        ┌──────┐    ┌─────────────────────┐
      S1│      │    │  MONITORING SSBUS.  │◄────────┐
        └──────┘    └─────────────────────┘         │
                              │                      │
                         ╱────────────╲   S2         │
                       ╱   DID=UID IN    ╲            │
                      ╱  TRANSFER COMMAND ? ╲   NO    │
                      ╲     ITS OWN        ╱──────────┘
                       ╲  SSM SELECTED ? ╱
                         ╲──────────────╱
                              │ YES
                    ┌─────────────────────────────┐ S3
                    │ RECEIVING COMMAND,ADDRESS,AND DATA.│
                    │ STORING DATA IN RAM IN SSBC-P │
                    └─────────────────────────────┘
                              │                    FETCH
        ┌──────┐         ╱──────────╲
      S4│      │───────╱ FETCH/STORE ?╲────────────────────┐
        └──────┘       ╲──────────────╱                    │
                              │ STORE                       │ S5
   ┌──────┐ ┌─────────────────────────────┐  ┌─────────────────────────────┐
 S9│      │ │ OBTAINING BUS USE RIGHT IN SSM.│  │ OBTAINING BUS USE RIGHT IN SSM.│
   └──────┘ │ RAM IN SSBC-S→DMA AMONG SSUs. │  │ SSU →DMA AMONG RAMs IN SSBC-S.│
            └─────────────────────────────┘  └─────────────────────────────┘
                    │                                 │
  ┌──────┐ ┌─────────────────────────────┐  ┌─────────────────────────────┐ S6
S10│     │ │ GENERATING RESPONSE TRANSFER│  │ GENERATING RESPONSE TRANSFER│
   └──────┘│ COMMAND.                    │  │ COMMAND.                    │
           └─────────────────────────────┘  └─────────────────────────────┘
                    │                                 │
  ┌──────┐ ┌─────────────────────────────┐  ┌─────────────────────────────┐ S7
S11│     │ │ OBTAINING SSBUS USE RIGHT.  │  │ OBTAINING SSBUS USE RIGHT.  │
   └──────┘└─────────────────────────────┘  └─────────────────────────────┘
                    │                                 │
  ┌──────┐ ┌─────────────────────────────┐  ┌─────────────────────────────┐ S8
S12│     │ │ SENDING RESPONSE TRANSFER COMMAND.│  │ SENDING RESPONSE TRANSFER │
   └──────┘└─────────────────────────────┘  │ COMMAND AND DATA          │
                    │                       └─────────────────────────────┘
                    │                                 │
            ┌─────────────────────────────────────────────────┐
            │            S S B U S                             │──16
            └─────────────────────────────────────────────────┘
```

F i g.  1 5 B

Fig. 16A

SSBUS ~16

S1 — MONITORING SSBUS.

S2 — DID=UID IN TRANSFER COMMAND ? ITS OWN SSM SELECTED ? — NO

YES

S3 — RECEIVING COMMAND, ADDRESS, AND DATA. STORING DATA IN RAM IN SSBC-P.

S4 — TRANSFER DIRECTION LSU→SSU — NO

YES

S9 — OBTAINING BUS USE RIGHT IN SSM. RAM IN SSBC-S→DMA AMONG SSUs.

S5 — OBTAINING BUS USE RIGHT IN SSM. SSU →DMA AMONG RAMs IN SSBC-S.

S10 — GENERATING RESPONSE TRANSFER COMMAND.

S6 — GENERATING RESPONSE TRANSFER COMMAND.

S11 — OBTAINING SSBUS USE RIGHT.

S7 — OBTAINING SSBUS USE RIGHT.

S12 — SENDING RESPONSE TRANSFER COMMAND.

S8 — SENDING RESPONSE TRANSFER COMMAND AND DATA

SSBUS ~16

# Fig. 16B

40

EXAMPLE OF DESCRIPTOR

| | | | BCT |
|---|---|---|---|
| BUFA | | | |
| DID | | | |
| SSUA | | | |

F i g.  1 7

EP 0 500 967 B1

PM 10

μP 18  SSM 12

PHYSICAL
ADDRESS
n

SSBC-P 22
INTERNAL
Buffer

PM INTERNAL BUS
24

SSBUS 16

REQUEST

READ INSTRUCTION
(a-R) ISSUED BY
μP TO SSM BY
PHYSICAL ADDRESS

n
n+1
n+2
n+3

BLOCK READ
REQUEST(Blk_R)

n  DATA  (a-D)

n+1  REQUEST  (b-R)

n+1  DATA  (b-D)

BLOCK RESPONSE
(Blk_D)

n+2  REQUEST  (c-R)

n+2  DATA  (c-D)

n+3  REQUEST  (d-R)

n+3  DATA  (d-D)

n+4  REQUEST  (INV-OV)

BLOCK READ
REQUEST

n+4  DATA

n+4
n+5
n+6

BLOCK RESPONSE

n+6  REQUEST  (INV-NC)  n+6

BLOCK READ
REQUEST

n+6  DATA

BLOCK RESPONSE

Fig. 18

Fig. 19

EP 0 500 967 B1

CPU INSTRUCTION | SSM WRITE | SSM WRITE | 

SSBC-P

SC | A | D → EC  NORMAL

SC | A | D → EC  NORMAL

Fig. 20A

CPU
INTERRUPT
PROCESS

RTN

CPU INSTRUCTION | SSM WRITE | | SSM WRITE (RETRY) |

SYNCHRONOUS
INTERRUPT
HAS ARISEN

SC | A | D → EC  ABNORMAL

SC | A | D → EC  NORMAL

Fig. 20B

18 CENTRAL PROCESSING UNIT

CPU

SYNCHRONOUS
INTERRUPT
REQUEST

22 CONNECTION UNIT

SSBC-P

80

STATE
CONTROL

WRITE
BUFFER

READ
BUFFER

381

382

36

EXCEPTION
DETECTION
SIGNAL

TRANSMITTING CIRCUIT

SS-BUS 16

Fig . 21A

Fig. 21B

ACEXC : ACCESS EXCEPTION          A : AVAILABLE
NEW·ACCS : NEW ACCESS             B : BUSY
CAN·ACPT : CANCEL ACCEPT          EP : EXCEPTION PENDING
WT·ACPT : WRITE ACCEPT            RP : RETRY PENDING
WT·CPT : WRITE COMPLETE

Fig. 21C

EP 0 500 967 B1

Fig. 22A

Fig. 22B

EP 0 500 967 B1

INSTRUCTION
STRING                              PROCESS BY INTERRUPT HANDLER

① R,R                                    ─────────→ PRE-PROCESS
② R,SSM                                             OBTAINING CONTENT OF EXCEPTION
③ . R,LSU                                           DETERMINING RETRIAL
④ LSU,LSU
⑤ R,SSR ── INTERRUPT HAS ARISEN      WHEN RETRIAL IS ALLOWED      WHEN RETRIAL IS NOT ALLOWED
   (R,SSM) ←─                               RETURN                       ISSUING RETRIAL CANCEL INSTRUCTION
                                                                              RETURN

F i g .  2 2 C

EP 0 500 967 B1